(19) Europäisches Patentamt
European Patent Office
Office européen des brevets

(11) **EP 3 380 760 B1**

(12) **EUROPÄISCHE PATENTSCHRIFT**

(45) Veröffentlichungstag und Bekanntmachung des Hinweises auf die Patenterteilung:
**28.04.2021  Patentblatt 2021/17**

(21) Anmeldenummer: **16798727.0**

(22) Anmeldetag: **21.11.2016**

(51) Int Cl.:
***F16J 15/08*** *(2006.01)*

(86) Internationale Anmeldenummer:
**PCT/EP2016/078285**

(87) Internationale Veröffentlichungsnummer:
**WO 2017/089291 (01.06.2017 Gazette 2017/22)**

(54) **FLACHDICHTUNG SOWIE EINE FLACHDICHTUNG ENTHALTENDER DICHTVERBAND**

FLAT SEAL AND SEALING ASSEMBLY CONTAINING A FLAT SEAL

JOINT PLAT AINSI QUE ENSEMBLE D'ÉTANCHÉITÉ CONTENANT UN JOINT PLAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2015  DE 102015120452**
**30.11.2015  DE 102015120782**

(43) Veröffentlichungstag der Anmeldung:
**03.10.2018  Patentblatt 2018/40**

(73) Patentinhaber: **ElringKlinger AG**
**72581 Dettingen (DE)**

(72) Erfinder: **SCHMUCKER, Frank**
**89584 Ehingen (DE)**

(74) Vertreter: **Hoeger, Stellrecht & Partner Patentanwälte mbB**
**Uhlandstrasse 14c**
**70182 Stuttgart (DE)**

(56) Entgegenhaltungen:
**JP-U- H0 371 155          US-A1- 2003 062 691**
**US-A1- 2007 090 607**

EP 3 380 760 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine zwischen Bauteilen einspannbare und zumindest im Wesentlichen metallische Flachdichtung mit mindestens einer Medien-Durchgangsöffnung sowie Schraubenlöchern für den Durchtritt von dem Einspannen der Flachdichtung dienenden Montageschrauben, wobei die Flachdichtung zumindest um die Medien-Durchgangsöffnung herum mindestens eine Dichtungslage aufweist, welche sich vorzugsweise über mindestens den größten Teil der Flachdichtung erstreckt, mindestens eine Dichtungslage mit einer die Medien-Durchgangsöffnung umschließenden und vorzugsweise höhenelastischen Abdichtsicke und mindestens eine Dichtungslage zur Begrenzung der Verformung der Abdichtsicke mit einem Stopper versehen ist, welcher die Medien-Durchgangsöffnung zumindest im Wesentlichen umschließt, und wobei die Flachdichtung Mittel zur räumlichen Vergleichmäßigung der Pressung des Stoppers der eingebauten Flachdichtung (nämlich zur Vergleichmäßigung längs des Stoppers) aufweist.

Insbesondere betrifft die Erfindung eine als Zylinderkopfdichtung gestaltete derartige Flachdichtung; in diesem Fall handelt es sich bei der Medien-Durchgangsöffnung insbesondere um eine einem Motorzylinder zugeordnete Brennraum-Durchgangsöffnung.

Ferner betrifft die Erfindung einen sogenannten Dichtverband mit einer zwischen Bauteilen eingespannten, im Wesentlichen metallischen solchen Flachdichtung, wobei mindestens eines der Bauteile in Richtung senkrecht zu der von der Flachdichtung definierten Ebene eine örtlich unterschiedliche Bauteilsteifigkeit aufweist.

Handelt es sich bei der Flachdichtung um eine Zylinderkopfdichtung, umfassen die Bauteile des vorgenannten Dichtverbands den Motorblock und mindestens einen Zylinderkopf eines Hubkolben-Verbrennungsmotors, welche die Zylinderkopfdichtung, im Fall eines Motors mit mehreren Zylinderköpfen die Zylinderkopfdichtungen, zwischen sich aufnehmen und mittels Montageschrauben (Zylinderkopfschrauben) miteinander verspannt sind (in Richtung senkrecht zu der von der Zylinderkopfdichtung bzw. den Zylinderkopfdichtungen definierten Ebene).

Die Erfindung betrifft aber auch andere Flachdichtungen und Dichtverbände, wie eine sogenannte Abgaskrümmerdichtung eines Hubkolben-Verbrennungsmotors, welche zwischen einem Zylinderkopf und einem sogenannten Abgaskrümmer eingebaut wird.

Im Falle einer Zylinderkopfdichtung handelt es sich bei der vorstehend erwähnten Medien-Durchgangsöffnung wie bereits erwähnt insbesondere um eine einem Zylinder des Motors zugeordnete Brennraumöffnung, es könnte sich aber auch um eine Durchgangsöffnung für Kühlwasser oder Motoröl handeln; im Fall einer Abgaskrümmerdichtung bildet die Medien-Durchgangsöffnung eine Abgas-Öffnung.

Wenn vorstehend von einer zumindest im Wesentlichen metallischen Flachdichtung mit mindestens einer Dichtungslage die Rede ist, soll damit zum Ausdruck gebracht werden, dass eine üblicherweise aus Stahlblech (erforderlichenfalls Federstahlblech) hergestellte Dichtungslage oder mehrere solche Dichtungslagen nicht rein metallisch sein muss bzw. müssen, sondern mit einem nicht-metallischen Material beschichtet sein kann bzw. können, beispielsweise mit einem der sogenannten Mikroabdichtung dienenden Material oder einem Material, mit welchem die Gleitreibung vermindert wird, oder dass ein anderes Dichtungselement nicht rein metallisch ist oder gegebenenfalls aus einem nichtmetallischen Material besteht.

Die mindestens eine Dichtungslage erstreckt sich bevorzugt über die gesamte Flachdichtung, die Erfindung betrifft aber auch Flachdichtungen, bei denen sich eine Dichtungslage oder mehrere Dichtungslagen nur über einen Teil der Flachdichtung erstreckt bzw. erstrecken.

Bei einer einlagigen bzw. mehrlagigen Flachdichtung der eingangs erwähnten Art können die einer Medien-Durchgangsöffnung zugeordnete Abdichtsicke und der der Abdichtsicke zugeordnete Stopper an bzw. in derselben Dichtungslage oder jeweils an bzw. in einer von mehreren Dichtungslagen vorgesehen sein. Außerdem können, wie dies bei Flachdichtungen bereits bekannt ist, für eine Abdichtsicke mehrere Stopper vorgesehen sein, insbesondere ein zwischen der Abdichtsicke und dem Rand der Medien-Durchgangsöffnung vorgesehener erster Stopper und ein, von der Medien-Durchgangsöffnung aus gesehen, hinter der Abdichtsicke liegender zweiter Stopper - wenn für eine Abdichtsicke nur ein Stopper vorgesehen ist, liegt dieser in einer Draufsicht auf die Flachdichtung bevorzugt zwischen der Abdichtsicke und der dieser zugeordneten Medien-Durchgangsöffnung.

Wie bei bekannten im Wesentlichen metallischen Flachdichtungen handelt es sich bei dem Stopper um ein (in einer Draufsicht auf die Flachdichtung) im Wesentlichen längliches und meist zumindest ungefähr kreisringförmiges Gebilde, welches nicht unbedingt kontinuierlich sein muss, jedoch die zugeordnete Medien-Durchgangsöffnung bevorzugt lückenlos oder zumindest weitgehend umschließt - bei manchen Zylinderkopfdichtungen für Mehrzylinder-Motoren weisen die den Brennraumöffnungen dieser Zylinderkopfdichtungen zugeordneten Stopper in den zwischen einander benachbarten Brennraumöffnungen vorhandenen stegförmigen Bereichen der Zylinderkopfdichtung jeweils eine Lücke auf. In einer Draufsicht auf die Flachdichtung muss der Stopper um die ihm zugeordnete Medien-Durchgangsöffnung herum nicht überall dieselbe Breite aufweisen sondern kann eine längs des Stoppers variierende Breite, das heißt ein sogenanntes Breitenprofil besitzen.

Die Bauteile, zwischen welchen die Flachdichtung mit Hilfe von Montageschrauben eingespannt wird, können nicht als absolut starre Bauteile betrachtet werden, wozu auf Folgendes hingewiesen wird: Da die Einspannkräfte durch die Montageschrauben erzeugt und deshalb nur mehr oder minder punktuell in die Bauteile und die Flachdichtung eingeleitet werden, lassen sich Verzüge der die Flachdichtung zwischen sich aufnehmenden Bauteile nicht vermeiden - in den Schraubenbereichen führen die Montageschrauben zu einer maximalen Annäherung der Bauteile aneinander, während der in Richtung senkrecht zur Flachdichtungsebene gemessene Abstand der Bauteile voneinander in den sogenannten Zwischenschraubenbereichen (den zwischen den Montageschrauben liegenden Bereichen) mit zunehmendem Abstand von den Montageschrauben aufgrund der Reaktionskräfte der eingespannten Flachdichtung und der hieraus resultierenden elastischen Verformungen der Bauteile größer wird. Schon dies hat zur Folge, dass die von den Montageschrauben aufgebrachten Einspannkräfte nicht gleichmäßig über die gesamte Flachdichtung verteilt sind. Hinzu kommt, dass die Bauteile in Richtung senkrecht zu der von der Flachdichtung definierten Ebene nicht überall dieselbe mechanische Festigkeit, das heißt dieselbe Bauteilsteifigkeit besitzen - so weisen beispielsweise der Motorblock und der Zylinderkopf eines Hubkolben-Verbrennungsmotors größere Hohlräume auf, insbesondere für Kühlwasser, aber auch für Motoröl, welche zu örtlich geringeren Bauteilsteifigkeiten und damit ohne besondere Maßnahmen dazu führen, dass die auf die eingebaute Zylinderkopfdichtung einwirkenden Pressungskräfte in den Zwischenschraubenbereichen lokal noch weiter vermindert werden.

Unter anderem zu dem Zweck, die (aufgrund der mehr oder minder punktuellen Einleitung der Schraubenkräfte in den Dichtverband und der vorstehend geschilderten Verzüge der die Flachdichtung zwischen sich aufnehmenden Bauteile) örtlich unterschiedlichen, auf die Flachdichtung einwirkenden Pressungskräfte zu vergleichmäßigen, ist es insbesondere bei als Zylinderkopfdichtungen gestalteten Flachdichtungen der eingangs erwähnten Art bekannt, den bzw. die Stopper mit einem sogenannten Höhenprofil zu versehen, das heißt mit einem Profil, dessen Höhe (bezogen auf die von der mit dem Stopper versehenen Dichtungslage definierte Ebene) längs des Stoppers, das heißt in Umfangsrichtung der dem Stopper zugeordneten Medien-Durchgangsöffnung, variiert; dabei ist es üblich, den Stopper so zu gestalten, dass seine Höhe in den sogenannten und vorstehend erwähnten Zwischenschraubenbereichen größer ist als in den Schraubenbereichen, wobei in den meisten Fällen die Stopperhöhe mit zunehmendem Abstand von den Schraubenbereichen stetig zunimmt und in den Schraubenbereichen ihren kleinsten Wert hat. Wird als Stopper ein metallischer Ring verwendet, der an einer Dichtungslage befestigt ist, erfolgt die Herstellung des Stoppers so, dass ausgehend von einem Metallring überall gleicher Höhe oder Dicke Letztere durch einen Prägevorgang mit einem Höhenprofil versehen wird, welches an denjenigen Stellen des Metallrings seine kleinste Höhe bzw. Dicke aufweist, welche bei eingebauter Flachdichtung den Montageschrauben am nächsten liegen. Ein solches Herstellungsverfahren stößt jedoch an seine Grenzen, wenn die für eine Vergleichmäßigung der Pressungskräfte an sich erforderlichen Höhenunterschiede des zu erzeugenden Höhenprofils ein vor allem vom Material des Metallrings und den in der Praxis verfügbaren Prägekräften bestimmtes Maximum überschreiten, da sich dann die Dicke des eingesetzten Metallring-Rohlings durch den Prägevorgang bereichsweise nicht mehr so stark verringern lässt, wie dies an den (bei eingebauter Flachdichtung) schraubennahen Bereichen des Metallrings erforderlich wäre, um in den Zwischenschraubenbereichen die an sich erforderliche Höhe bzw. Dicke des Metallrings zur Verfügung zu stellen. Dies gilt insbesondere für einen solchen Stopper, der (bei eingebauter Flachdichtung) mindestens einen Zwischenschraubenbereich aufweist, welcher (wiederum bei eingebauter Flachdichtung) einem Bauteilbereich mit besonders geringer Bauteilsteifigkeit gegenüberliegt.

Zum Stand der Technik gehören aber auch insbesondere als Zylinderkopfdichtungen gestaltete metallische Flachdichtungen mit mindestens einem Stopper, welcher überall dieselbe Höhe aufweist. Wenn nun zumindest eines der die eingebaute Flachdichtung zwischen sich aufnehmenden Bauteile im Bereich des Stoppers und/oder in dessen Nähe nur an einer Stelle oder ganz wenigen Stellen eine lokal deutlich geringere Bauteilsteifigkeit aufweist, welche dadurch kompensiert werden sollte, dass die Höhe des Stoppers in seinem dieser Stelle zugeordneten Bereich bzw. in seinen diesen Stellen zugeordneten Bereichen eine größere Höhe aufweist als in den anderen Stopperbereichen, müsste die Höhe des Stopper-Rohlings in allen diesen anderen Stopperbereichen durch den Prägevorgang reduziert werden, was zumindest unwirtschaftlich wäre.

Ein weiteres, im Betrieb eines Dichtverbands der vorstehend definierten Art auftretendes Problem soll im Folgenden anhand einer als Zylinderkopfdichtung gestalteten Flachdichtung der eingangs definierten Art erläutert werden:

Solche Zylinderkopfdichtungen sind im Allgemeinen so gestaltet, dass die auf die eingebaute Zylinderkopfdichtung einwirkenden Pressungskräfte und diejenigen Kräfte, mit denen der aus Motorblock, Zylinderkopfdichtung und Zylinderkopf bestehende Dichtverband verspannt ist, in den Bereichen der die Brennraumöffnungen der Zylinderkopfdichtung umgebenden Stopper am größten sind. Dadurch, nämlich durch solche Stopper, werden nicht nur die der Abdichtung der Brennraumöffnungen dienenden Abdichtsicken vor für die Dauerhaltbarkeit der Abdichtsicken schädlichen zu großen Verformungen (Abflachungen) geschützt, sondern im Motorbetrieb wird auch eine unerwünscht hohe Dynamik des sogenannten Dichtspalts vermieden - unter dem Dichtspalt wird der die Zylinderkopfdichtung aufnehmende Zwischenraum zwischen dem Motorblock und dem Zylinderkopf verstanden, und unter der Dichtspaltdynamik die im Motorbetrieb im Rhythmus der Kurbelwellendrehung bereichsweise auftretende Aufweitung des Dichtspalts, das heißt eine Vergrößerung der Höhe des Dichtspalts dadurch, dass der Zylinderkopf zwischen den Montageschrauben (Zylinderkopfschrauben) durch die in den Motor-Zylindern auftretenden hohen Gasdrücke immer wieder kurzzeitig verformt und dabei sein Abstand vom Motorblock kurzzeitig immer wieder vergrößert wird. Besonders groß ist die Dichtspaltdynamik an solchen Stellen des Dichtspalts, an welchen mindestens eines der den Dichtspalt begrenzenden Bauteile eine lokale geringere Bauteilsteifigkeit aufweist, welche beispielsweise durch einen verhältnismäßig großen und dem Dichtspalt benachbarten Bauteil-Hohlraum für den Durchgang von Kühlwasser oder Motoröl verursacht wird, insbesondere dann, wenn dieser Hohlraum im Zylinderkopf liegt. Im Hinblick auf die Dauerhaltbarkeit des Motors ist aber anzustreben, die Dichtspaltdynamik überall möglichst klein zu halten.

Ausgehend von einer Flachdichtung bzw. einem Dichtverband der eingangs definierten Art lag der Erfindung die Aufgabe zugrunde, die Vergleichmäßigung der auf die Flachdichtung einwirkenden Pressungskräfte noch weiter zu verbessern und/oder die im Betrieb auftretende Dichtspaltdynamik noch weiter zu verringern, und zwar durch Mittel, welche sich mit bekannten Verfahren verhältnismäßig kostengünstig herstellen lassen.
Erfindungsgemäß wird diese Aufgabe durch eine Flachdichtung gemäß Anspruch 1 gelöst.

Unter einem Bauteil-Abstützelement ist dabei Folgendes zu verstehen:
Es kann sich um ein Element der Flachdichtung handeln, welches dazu führt, dass ein das Abstützelement enthaltender Bereich der Flachdichtung, wenn diese eingebaut ist, in einen benachbarten Bauteilbereich mit einer lokalen Bauteilschwäche, das heißt mit einer gegenüber benachbarten Bauteilbereichen reduzierten Bauteilsteifigkeit, sozusagen eintaucht und so diese lokale Bauteilschwäche kompensiert und das Bauteil lokal abstützt; bei dem Abstützelement kann es sich aber auch nur um eine lokale Ergänzung des Stoppers handeln, um so die wirksame gesamte Höhe von Stopper und Abstützelement lokal um ein Maß zu vergrößern, welches sich aus Herstellgründen allein mit dem Stopper nicht oder nur schwer realisieren lassen würde.

Wenn vorstehend davon die Rede ist, dass das Bauteil-Abstützelement in einer Draufsicht auf die Flachdichtung nur über einem Längsabschnitt des Stoppers vorgesehen ist, soll hierunter verstanden werden, dass sich das Bauteil-Abstützelement je nach Richtung der Draufsicht auf die Flachdichtung über oder unter dem besagten Längsabschnitt (oder Längsbereich) des Stoppers befindet. Außerdem kann das Bauteil-Abstützelement den Stopper (von der Medien-Durchgangsöffnung aus gesehen) radial nach innen und/oder radial nach außen auch überragen oder in der Draufsicht auf die Flachdichtung auch etwas schmäler als der Stopper sein. In einer Draufsicht auf die Flachdichtung soll das Bauteil-Abstützelement also nur im Wesentlichen lediglich über einem Längsabschnitt oder -bereich des Stoppers vorgesehen sein, obwohl Ausführungsformen zu bevorzugen sind, bei denen in einer Draufsicht auf die Flachdichtung das Bauteil-Abstützelement ausschließlich über bzw. unter einem Stopper-Längsabschnitt liegt.

Wenn schließlich vorstehend sowie im Folgenden davon die Rede ist, dass die Flachdichtung aufgrund des Bauteil-Abstützelements lokal eine größere Dicke aufweist, darf dieses Merkmal nicht derart einschränkend verstanden werden, dass unter der Dicke der Flachdichtung die Summe der Materialdicken des das Abstütz-element enthaltenden Bereichs der Flachdichtung zu verstehen ist - die Dicke dieses Flachdichtungsbereichs lässt sich insbesondere auch dadurch vergrößern, dass aus dem Blech einer Dichtungslage lokal ein Vorsprung oder Vorsprünge herausgeprägt wird bzw. werden, welche in Richtung senkrecht zur Dichtungsebene wesentlich verformungssteifer als eine Abdichtsicke sind, insbesondere so steif wie oder annähernd so steif sind wie der Stopper. Bei bevorzugten Ausführungsformen der Erfindung ist das Bauteil-Abstützelement also so gestaltet und/oder bemessen und/oder besitzt das Material des Bauteil-Abstützelements eine solche Festigkeit, dass sich die Höhe bzw. Dicke des Bauteil-Abstützelements bei der Montage der Flachdichtung und im Dichtungsbetrieb zumindest nicht wesentlich ändert, das heißt dass das Bauteil-Abstützelement bezüglich der auf dieses einwirkenden Pressungskräfte als verformungssteif angesehen werden kann.

Unter den Stopper-Längsabschnitten, weiche dem dem Bauteil-Abstützelement zugeordneten Stopper-Längsabschnitt unmittelbar benachbart sind, sollen Stopper-Längsbereiche verstanden werden, welche in einer Draufsicht auf die Flachdichtung direkt an den dem Abstützelement zugeordneten Stopper-Längsabschnitt angrenzen oder diesem direkt benachbart sind.

Aus der US 2007/0090607 A1 ergibt sich eine metallische Zylinderkopfdichtung mit einer mehrlagigen Dichtungsplatte, welche um eine Brennraumöffnung herum in zwei Außenlagen jeweils eine die Brennraumöffnung umschließende Abdichtsicke sowie zwischen diesen Außenlagen eine Innenlage besitzt, gegen welche die Kuppen der einander gegenüberliegenden Abdichtsicken vorspringen. Um die Brennraumöffnung herum ist auf der Innenlage eine Auflage vorgesehen, welche sich vom Rand der Brennraumöffnung in radialer Richtung bis unter die Abdichtsicke der benachbarten Außenlage erstreckt und am Rand der Brennraumöffnung umgefalzt, das heißt auf sich selbst so umgelegt wurde, dass sich auf der eigentlichen Auflage ein ringförmiger Blechbereich ergibt, welcher sich vom Rand der Brennraumöffnung in radialer Richtung erstreckt, jedoch vor den Abdichtsicken endet, so dass dieser ringförmige Blechbereich einen Stopper (Verformungsbegrenzer) für die beiden Abdichtsicken bildet. Unter diesem Stopper ist die Innenlage mit einer Sicke versehen, welche in von der Auflage wegweisender Richtung vorspringt und sich entweder kontinuierlich und in sich geschlossen um die Brennraumöffnung herum erstreckt, oder um die Brennraumöffnung herum aus mehreren von einander beabstandeten Sickenabschnitten besteht, welche in den sogenannten Zwischenschraubenbereichen, das heißt in der Nachbarschaft von Bereichen der Zylinderkopfdichtung angeordnet sind, die zwischen den für die Zylinderkopfschrauben vorgesehenen Schraubenlöchern der Zylinderkopfdichtung liegen. Diese Sicke bzw. diese Sickenabschnitte weisen ein Höhenprofil auf, dessen Höhe mit zunehmendem Abstand von den Schraubenlöchern zunimmt, wodurch die Pressung der Zylinderkopfdichtung im Stopperbereich vergleichmäßigt werden soll.

Diese bekannte Zylinderkopfdichtung ist jedoch mit der erfindungsgemäßen Flachdichtung deshalb nicht vergleichbar, weil nach dem Grundkonzept dieser bekannten Zylinderkopfdichtung die an der Innenlage unter deren Auflage vorgesehene Sicke bzw. deren Sickenabschnitte beim Einbau der Dichtung plastisch deformiert werden sollen (sh. ABSTRACT, Zeilen 5 bis 3 von unten sowie Zeilen 1 bis 5 des letzten Absatzes des Anspruchs 1); die in Sickenabschnitte aufgeteilte Sicke soll bei gepresster Zylinderkopfdichtung bereichsweise sogar so stark plastisch deformiert werden, dass sie völlig flach ist (sh. Abschnitt [0051], Zeilen 11 bis 1 in Verbindung mit der drittletzten Zeile des Anspruchs 1). Hingegen soll ein Bauteil-Abstützelement einer erfindungsgemäßen Flachdichtung so ausgebildet sein, dass sich seine Höhe bzw. Dicke unter den beim Einbau der Flachdichtung und im Dichtungsbetrieb auf das Bauteil-Abstützelement einwirkenden Pressungskräften zumindest nicht wesentlich ändert bzw. dass das Bauteil-Abstützelement verformungssteifer ist als die Abdichtsicke für die Medien-Durchgangsöffnung der erfindungsgemäßen Flachdichtung, bei welcher durch den Stopper und das Bauteil-Abstützelement gerade verhindert wird, dass die Abdichtsicke übermäßig verformt oder gar flachgepresst wird.

Mit einer erfindungsgemäßen Flachdichtung lässt sich unter anderem mindestens einer der folgenden Vorteile erreichen:

Die Hersteller von Aggregaten, in welche eine Flachdichtung eingebaut wird, fordern vom Dichtungshersteller, dass die Flachdichtung eine bestimmte sogenannte Einbaudicke aufweist - hierunter ist die senkrecht zur Dichtungsebene gemessene Dicke der Flachdichtung im eingebauten, das heißt gepressten Zustand zu verstehen, und die Einbaudicke bestimmt die Höhe des vorstehend erläuterten sogenannten Dichtspalts zwischen den die Flachdichtung zwischen sich aufnehmenden Bauteilen. Die Forderung einer bestimmten Einbaudicke der Flachdichtung beruht beispielsweise bei einem Hubkolben-Verbrennungsmotor darauf, dass die Dichtspalthöhe auch Einfluss auf die axiale Länge eines Zylinder-Brennraums und damit auf die sogenannte Verdichtung des Motors hat. Die vorstehenden Erläuterungen sind noch durch den Hinweis zu ergänzen, dass vor allem als Zylinderkopfdichtungen gestaltete Flachdichtungen für einen bestimmten Motor vom Dichtungshersteller häufig in mindestens zwei Ausführungsformen mit unterschiedlicher Einbaudicke gefertigt und geliefert werden, um beim Kunden, das heißt beim Motorhersteller, auftretenden Fertigungstoleranzen von Motorblock und Zylinderkopf dadurch Rechnung zu tragen, dass zur Erzielung einer gewünschten Verdichtung eine Zylinderkopfdichtung mit einer Einbaudicke verwendet wird, durch welche diese Fertigungstoleranzen kompensiert werden; unter einer bestimmten Einbaudicke sind also auch die vorstehend geschilderten unterschiedlichen Einbaudicken einer für ein bestimmtes Aggregat vorgesehenen Flachdichtung zu verstehen.

Bei einem herkömmlichen, eine Flachdichtung mit einem oder mehreren Stoppern enthaltenden Dichtverband muss die geforderte Einbaudicke der Flachdichtung auch durch die Höhe des bzw. der Stopper erreicht werden, welche auch so bemessen sein sollte, dass die oben erläuterte Dichtspaltdynamik überall möglichst gering ist. Wenn nun in einem Dichtverband nur ein eng begrenzter Bereich eines Bauteils wegen einer lokal eng begrenzten geringeren Steifigkeit dieses Bauteils abgestützt werden soll und gleichzeitig die oben erörterten Anforderungen an die Einbaudicke der Flachdichtung und die Dichtspaltdynamik erfüllt werden sollen, hat dies bei herkömmlichen Flachdichtungen die Folge, dass die Stopperhöhe in allen anderen Stopperbereichen, welche nicht der Abstützung des vorstehend erwähnten eng begrenzten Bauteilbereichs geringerer Steifigkeit dienen, reduziert werden muss, was nicht nur dann nachteilig oder aus Fertigungsgründen sogar unmöglich ist, wenn die Reduzierung der Stopperhöhe durch einen Prägevorgang erfolgt, sondern auch den Nachteil mit sich bringt, dass aufgrund der über einen großen Teil der Länge bzw. des Umfangs des Stoppers geringen Stopperhöhe die Funktion der dem Stopper zugeordneten Abdichtsicke beeinträchtigt wird - von der Stopperhöhe hängt der Grad der Verpressung, das heißt der Abflachung der Abdichtsicke der eingebauten Flachdichtung (im Vergleich zur Sickenhöhe bei noch nicht eingebauter, das heißt nicht gepresster Flachdichtung) ab, und auch eine nur lokal übermäßige Abflachung der Abdichtsicke beeinträchtigt deren Dauerhaltbarkeit, und außerdem wird durch eine weitgehende Verringerung der Stopperhöhe der sogenannte Arbeitspunkt der Abdichtsicke verschoben; unter dem Arbeitspunkt einer im Betrieb dynamisch beanspruchten Abdichtsicke versteht man diejenige Sickenstelle (in einem Querschnitt durch die Sicke), von der aus die Sicke bei einer Pressungsbeanspruchung ihre Höhe federelastisch ändert, das heißt verkleinert oder im Betrieb auch vergrößert, wobei sich die Lage des Arbeitspunkts abhängig vom Betriebszustand des Dichtverbands auch ändern kann. Diese Effekte (unerwünscht hohe Abflachungen und Verschiebung des Arbeitspunkts der Sicke) lassen sich durch das erfindungsgemäß vorgesehene mindestens eine Bauteil-Abstützelement beseitigen oder wenigstens minimieren.

In einem Dichtverband der eingangs definierten Art treten im Betrieb sogenannte Schiebebewegungen zwischen den die Flachdichtung zwischen sich aufnehmenden Bauteilflächen und der Flachdichtung auf, bei einer mehrere Dichtungslagen aufweisenden Flachdichtung aber auch zwischen den Dichtungslagen (nämlich in der Dichtspaltebene liegende Relativbewegungen), verursacht durch im Betrieb auftretende, gegebenenfalls auch nur bereichsweise unterschiedliche Temperaturen und damit einhergehende unterschiedliche Wärmedehnungen der die Flachdichtung zwischen sich aufnehmenden Bauteile, bei einem Hubkolben-Verbrennungsmotor aber auch durch die im Motorbetrieb auftretenden, zeitlich und örtlich unterschiedlichen Gasdrücke. Diese zu Verschließerscheinungen führenden Schiebebewegungen lassen sich durch das erfindungsgemäß vorgesehene mindestens eine Bauteil-Abstützelement verringern, da Letzteres zu einer gewissen örtlichen Konzentration der Pressungskräfte führt, welche zwischen den Bauteilen und der Flachdichtung, bei einer mehrere Dichtungslagen aufweisenden Flachdichtung aber auch zwischen den Dichtungslagen wirken, und eine Erhöhung der Pressungskräfte hat eine Erhöhung der Reibungskräfte zur Folge, welche beim Auftreten solcher Schiebebewegungen überwunden werden müssen, so dass durch das erfindungsgemäße vorgesehene mindestens eine Bauteil-Abstützelement relative Schiebebewegungen zwischen den Bauteilen der Flachdichtung, bei einer mehrlagigen Flachdichtung aber auch zwischen deren Dichtungslagen vermindert werden.

Wie sich aus den vorstehenden Ausführungen ergibt, weisen bevorzugte Ausführungsformen der erfindungsgemäßen Flachdichtung mindestens zwei Dichtungslagen auf.

Das erfindungsgemäß vorgesehene mindestens eine Bauteil-Abstützelement kann grundsätzlich in irgendeiner Weise so an oder in der Flachdichtung vorgesehen sein, dass seine Position auch im Betrieb gesichert ist; bei bevorzugten Ausführungsformen der Erfindung ist das Bauteil-Abstützelement jedoch an oder in einer Dichtungslage vorgesehen bzw. ausgebildet.

Vorteilhafte Ausführungsformen der Erfindung zeichnen sich durch die Merkmale eines oder mehrerer der Ansprüche 2 bis 13 aus und insbesondere durch eines oder gegebenenfalls mehrere der folgenden Merkmale:

(i) bei einer mehrlagigen Flachdichtung ist der Stopper an einer Dichtungslage und das Bauteil-Abstützelement an einer anderen Dichtungslage vorgesehen;

(ii) eine mit mindestens einem Bauteil-Abstützelement versehene Dichtungslage ist auch mit mindestens einer (einer Medien-Durchgangsöffnung zugeordneten) Abdichtsicke versehen;

(iii) das mindestens eine Bauteil-Abstützelement wird von einer Prägung einer Dichtungslage gebildet, welche mindestens einen diese Dichtungslage überragenden Vorsprung bildet (die Herstellung eines solchen Bauteil-Abstützelements ist meist einfacher und kostengünstiger als diejenige eines Bauteil-Abstützelements, welches die Form einer an einer Dichtungslage fest angebrachten Auflage hat);

(iiii) an einer Seite (das heißt Hauptoberfläche) einer Dichtungslage ist ein Stopper und an der anderen Seite (das heißt Hauptoberfläche) dieser Dichtungslage ist das Bauteil-Abstützelement vorgesehen, wobei sich der Stopper und das Bauteil-Abstützelement, in einer Draufsicht auf die Dichtungslage gesehen, zumindest im Wesentlichen gegenüberliegen (wird das Bauteil-Abstützelement durch Prägen der Dichtungslage erzeugt, empfiehlt es sich, diesen Prägevorgang durchzuführen, ehe die Dichtungslage mit dem Stopper versehen wird).

Eine erfindungsgemäße Flachdichtung, deren Stopper mit einem Höhenprofil versehen ist, welches große Höhenunterschiede aufweist, ermöglicht eine verhältnismäßig problemlose Fertigung bei gleichzeitiger Erfüllung mindestens eines Teils der vorstehend an eine Flachdichtung gestellten Anforderungen (Einbaudicke, insgesamt betrachtet geringe Dichtspaltdynamik, Begrenzung der Abflachung der Abdichtsicke und zumindest Reduzierung von Verschiebungen des Sicken-Arbeitspunkts) dadurch, dass das für die Erfüllung dieser Anforderungen theoretisch erforderliche Höhenprofil des Stoppers sozusagen aufgeteilt bzw. verteilt wird auf den Stopper einerseits und das mindestens eine Bauteil-Abstützelement andererseits. Eine solche vorteilhafte Ausführungsform der Flachdichtung, bei welcher der Stopper mit einem Höhenprofil versehen ist, dessen Höhe, bezogen auf die von der mit dem Stopper versehenen Dichtungslage definierte Ebene, in Umfangsrichtung der dem Stopper zugeordneten Medien-Durchgangsöffnung bzw. in Längsrichtung des Stoppers variiert, zeichnet sich dadurch aus, dass ein für die Pressungsvergleichmäßigung erforderliches theoretisches Höhenprofil des Stoppers ersetzt ist durch eine mit dem theoretisch erforderlichen Höhenprofil gleichwirkende Kombination aus einem tatsächlichen Höhenprofil des Stoppers und dem mindestens einen Bauteil-Abstützelement.

Bevorzugt wird eine solche vorteilhafte Ausführungsform der Flachdichtung so gestaltet, dass die Höhe des Höhenprofils des Stoppers in mindestens einem Längsabschnitt des Stoppers zwischen einem maximalen Wert $H_{max}$ in mindestens einem ersten Längsabschnittbereich und einem minimalen Wert $H_{min}$ in mindestens einem zweiten Längsabschnittbereich dieses Stopper-Längsabschnitts um eine Höhendifferenz $\Delta H = H_{max} - H_{min}$ variiert, wobei im ersten Längsabschnittbereich die tatsächliche Höhe des Stopper-Höhenprofils gegenüber einer für die Pressungsvergleichmäßigung erforderlichen theoretischen Höhe des Stopper-Höhenprofils um höchstens $\dfrac{\Delta H}{2}$ reduziert ist, und dass im ersten Längsabschnittbereich des Stoppers die Reduktion der Höhe des Stopper-Höhenprofils durch mindestens ein über dem ersten Längsabschnittbereich des Stoppers vorgesehenes Bauteil-Abstützelement kompensiert ist.

Wie sich aus den vorstehenden Erläuterungen der vorliegenden Erfindung ergibt, zeichnen sich bevorzugte Ausführungsformen der Erfindung, bei denen das Höhenprofil des aus Stopper und Bauteil-Abstützelement bestehenden Ensembles nicht auf den Stopper und das mindestens eine Bauteil-Abstützelement aufgeteilt bzw. verteilt wird, dadurch aus, dass der Stopper überall dieselbe Höhe bzw. Dicke aufweist und eine lokal größere wirksame Höhe dieses Ensembles nur durch das mindestens eine Bauteil-Abstützelement erreicht wird.

Eine Flachdichtung gemäß den vorstehend definierten vorteilhaften Ausführungsformen mit einem ein Höhenprofil aufweisenden Stopper lässt sich auch dann kostengünstig herstellen, wenn der eigentliche Stopper mittels eines Prägevorgangs mit seinem tatsächlichen Höhenprofil versehen wird.

Wie bereits erwähnt, werden für eine erfindungsgemäße Flachdichtung Ausführungsformen bevorzugt, bei denen sich mindestens diejenige Dichtungslage oder diejenigen Dichtungslagen über die ganze Flachdichtung erstreckt bzw. erstrecken, welche mit der Abdichtsicke und/oder dem Stopper und/oder dem Bauteil-Abstützelement versehen ist bzw. sind.

Da die vorliegende Erfindung auf dem Gebiet der Zylinderkopfdichtungen besondere Bedeutung hat, ist eine erfindungsgemäße Flachdichtung insbesondere als Zylinderkopfdichtung für einen Hubkolben-Verbrennungsmotor gestaltet. Außerdem wirkt sich die Erfindung besonders vorteilhaft auf diejenigen Bereiche von Zylinderkopfdichtungen aus, welche als Medien-Durchgangsöffnung eine (einem Motorzylinder zugeordnete) Brennraumöffnung beinhalten - um eine Brennraumöffnung einer Zylinderkopfdichtung herum muss gegen die höchsten Mediendrücke, nämlich gegen die im Motorbetrieb auftretenden Gasdrücke abgedichtet werden, weshalb zumindest in den meisten Fällen eine Zylinderkopfdichtung so gestaltet wird, dass bei eingebauter, das heißt gepresster Zylinderkopfdichtung die höchsten Pressungskräfte auf diejenigen Dichtungsbereiche einwirken, welche eine Brennraumöffnung umgeben.

Die Erfindung betrifft auch einen Dichtverband mit einer zwischen Bauteilen eingespannten, im Wesentlichen metallischen Flachdichtung, wobei mindestens eines der Bauteile mindestens eine örtlich unterschiedliche Bauteilsteifigkeit (in Richtung senkrecht zu der von der Flachdichtung definierten Ebene) und die Flachdichtung mindestens eine Medien-Durchgangsöffnung, Schraubenlöcher für den Durchtritt von dem Einspannen der Flachdichtung dienenden Montageschrauben und zumindest um die Medien-Durchgangsöffnung herum mindestens eine Dichtungslage aufweist, und wobei mindestens eine Dichtungslage mit einer die Medien-Durchgangsöffnung umschließenden Abdichtsicke und mindestens eine Dichtungslage, nämlich die mit der Abdichtsicke versehene Dichtungslage oder eine andere Dichtungslage, zur Begrenzung der Verformung der Abdichtsicke mit (mindestens) einem Stopper versehen ist, welcher die Medien-Durchgangsöffnung zumindest im Wesentlichen umschließt (nämlich vollständig oder bis auf mindestens eine Lücke), und wobei die Flachdichtung Mittel zur Vergleichmäßigung der Pressung des Stoppers der eingebauten Flachdichtung (das heißt der auf den Stopper einwirkenden Pressungskräfte) längs des Stoppers aufweist.

Entsprechend der Gestaltung und Wirkung einer erfindungsgemäßen Flachdichtung wird ein solcher Dichtverband erfindungsgemäß so gestaltet, dass die Mittel zur Vergleichmäßigung der Pressung des Stoppers längs des Stoppers wenigstens ein Bauteil-Abstützelement aufweisen, welches einem Bereich eines Bauteils gegenüberliegt (das heißt in einer Draufsicht auf die Flachdichtung über bzw. unter diesem Bauteilbereich angeordnet ist), in dem dieses Bauteil im Vergleich zu diesem Bauteilbereich unmittelbar benachbarten Bauteilbereichen eine geringere Bauteilsteifigkeit aufweist (im Vergleich zur Steifigkeit der unmittelbar benachbarten Bauteilbereiche), und welches in einer Draufsicht auf die Flachdichtung über bzw. unter einem Längsabschnitt des Stoppers vorgesehen und so gestaltet ist, dass im Bereich dieses Stopper-Längsabschnitts die Flachdichtung lokal eine größere Dicke aufweist als in Bereichen von diesem Stopper-Längsabschnitt unmittelbar benachbarten Stopper-Längsabschnitten, wobei das Bauteil-Abstützelement gegenüber auf die eingespannte Flachdichtung einwirkenden Pressungskräften verformungssteifer als die Abdichtsicke ist sowie ein geprägtes solches Höhenprofil aufweist, dass die Höhe des Bauteil-Abstützelements längs des Stoppers variiert.

Bevorzugte Ausführungsformen eines solchen erfindungsgemäßen Dichtverbands weisen eines oder mehrere der Merkmale der erfindungsgemäßen Flachdichtung auf, welche vorstehend als optionale Merkmale der Flachdichtung geschildert wurden.

Im Folgenden werden anhand der beigefügten Zeichnungen der Stand der Technik und bevorzugte Ausführungsformen der Erfindung beschrieben; dabei wird die Erfindung anhand von als Zylinderkopfdichtung gestalteten Flachdichtungen erläutert. Aus den beigefügten Zeichnungen sowie der nachfolgenden Beschreibung ergeben sich aber weitere Merkmale, Vorteile und Einzelheiten der Erfindung, welche für den Fachmann ersichtlich auch für Flachdichtungen anderer Art gelten.

In den Zeichnungen zeigen:

Fig. 1: einen Schnitt durch einen Bereich eines Dichtverbands eines Hubkolben-Verbrennungsmotors, wobei dieser Dichtverband umfasst den Motorblock, den Zylinderkopf und eine zwischen diesen Bauteilen angeordnete Zylinderkopfdichtung herkömmlicher Gestaltung;

Fig. 2: eine Draufsicht auf eine erfindungsgemäße Zylinderkopfdichtung;

Fig. 3: einen Schnitt durch diese Zylinderkopfdichtung entsprechend der Linie 3-3 in Fig. 2;

Fig. 4            einen Schnitt durch die Zylinderkopfdichtung nach der Linie 4-4 in Fig. 2;

Fig. 5A:          einen Schnitt durch die Zylinderkopfdichtung nach der Linie 5-5 in Fig. 2;

Fig. 5B:          eine Draufsicht auf den gemäß Fig. 2 linken Teil der Zylinderkopfdichtung, wobei es sich bei der Fig. 5B jedoch um eine schematische Darstellung zweier übereinander angeordneter Dichtungslagen der Zylinderkopfdichtung handelt, von denen die eine mit Brennraumöffnungen dieser Zylinderkopfdichtung zugeordneten Stoppern und die andere mit erfindungsgemäßen Bauteil-Abstützelementen versehen ist;

Fig. 5C:          eine schematische Darstellung eines Bereichs einer Dichtungslage einer erfindungsgemäßen Flachdichtung, und zwar in einer Schrägansicht, wobei diese Dichtungslage der in Fig. 5A links gezeigten Dichtungslage entsprechen kann und der in Fig. 5C dargestellte Bereich der Dichtungslage eine eine Medien-Durchgangsöffnung umschließende Abdichtsicke sowie eine erste Ausführungsform eines Bauteil-Abstützelements enthält;

Fig. 5D:          eine schematische Skizze des Ensembles aus Stopper und darüber liegendem Bauteil-Abstützelement zur Erläuterung eines Höhenprofils dieses Ensembles;

Fig. 6:           eine der Fig. 5C entsprechende Darstellung eines Bereichs einer Dichtungslage mit einer zweiten Ausführungsform eines erfindungsgemäßen Bauteil-Abstützelements;

Fig. 7A:          eine Schrägansicht eines Bereichs einer Dichtungslage, welcher nur eine dritte Ausführungsform eines erfindungsgemäßen BauteilAbstützelements enthält;

Fig. 7B:          einen Schnitt nach der Linie 7B-7B in Fig. 7A;

Fig. 8A bis 8D:   der Schnittdarstellung der Zylinderkopfdichtung in Fig. 1 entsprechende Schnittdarstellungen durch verschiedene Ausführungsformen einer erfindungsgemäßen Flachdichtung;

Fig. 9A:          Skizzen zur Verdeutlichung eines ersten Grundprinzips der Erfindung anhand einer der Fig. 8A entsprechenden Flachdichtung;

Fig. 9B:          eine dem rechten Teil der Fig. 9A entsprechende Skizze zur Verdeutlichung eines zweiten Grundprinzips der Erfindung;

Fig. 10A:         der Fig. 9A entsprechende Skizzen einer Variante der Erfindung;

Fig. 10B:         eine der Fig. 5D entsprechende Skizze zu der in Fig. 10A dargestellten Ausführungsform, und

Fig. 11A und 11B: den Figuren 10A und 10B entsprechende Skizzen für eine weitere Variante der Erfindung.

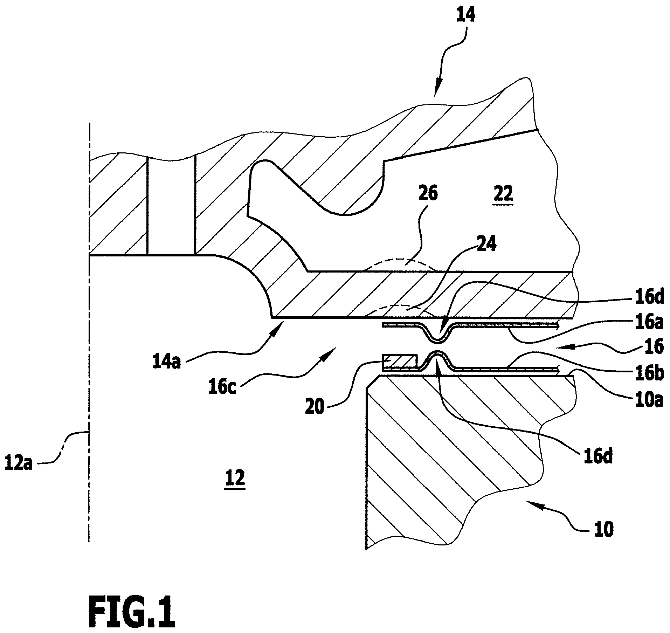

Die Fig. 1 zeigt einen axialen Schnitt durch Bereiche verschiedener Teile eines Hubkolben-Verbrennungsmotors, nämlich durch einen Bereich eines Motorblocks 10, welcher einen Brennraum mindestens eines Zylinders des Motors umschließt, wobei nur ein Teil eines solchen Brennraums 12 dargestellt wurde, dessen Achse, das heißt die Zylinderachse mit 12a bezeichnet wurde. Ferner geht der Schnitt durch einen Bereich eines Zylinderkopfs 14 sowie durch eine Zylinderkopfdichtung 16 - die Fig. 1 zeigt die Zylinderkopfdichtung 16 im noch nicht gepressten Zustand, das heißt vor der Montage des Zylinderkopfs 14 auf dem Motorblock 10 und dem dabei erfolgenden Anziehen von in Fig. 1 nicht gezeigten Zylinderkopfschrauben.

Der Einfachheit halber wurde als Zylinderkopfdichtung 16 eine Dichtung mit zwei Dichtungslagen 16a und 16b dargestellt, von denen jede eine dem Brennraum 12 entsprechende Öffnung aufweist, wobei diese Öffnungen der beiden Dichtungslagen insbesondere deckungsgleich übereinanderliegen (in Richtung der Zylinderachse 12a gesehen) und gemeinsam eine Brennraumöffnung 16c der Zylinderkopfdichtung bilden. Jede der beiden Dichtungslagen 16a, 16b ist außerdem mit einer Brennraum-Abdichtsicke 16d versehen, welche die Brennraumöffnung 16c geschlossen, das heißt lückenlos umgibt.

Bei montiertem Zylinderkopf 14 und angezogenen Zylinderkopfschrauben wird die Zylinderkopfdichtung 16 zwischen Dichtflächen 10a und 14a des Motorblocks 10 und des Zylinderkopfs 14 gepresst, wobei die Brennraum-Abdichtsicken 16d mit ihren Kuppen gegeneinandergepresst werden und die in gemäß Fig. 1 vertikaler Richtung gemessene Höhe der Brennraum-Abdichtsicken federelastisch reduziert ist (wie bei metallischen Flachdichtungen üblich, bestehen mit Abdichtsicken versehene Dichtungslagen und damit die Dichtungslagen 16a und 16b aus Federstahlblechen).

Bei metallischen Flachdichtungen mit einer oder mehreren Dichtungslagen wird eine mit einer federelastisch abflachbaren Sicke versehene Dichtungslage üblicherweise als Funktionslage bezeichnet.

Damit die Abdichtsicken 16d bei der Montage der Zylinderkopfdichtung 16 und im Dichtungsbetrieb nicht übermäßig verformt, das heißt abgeflacht werden, was schädliche Folgen für die Dauerhaltbarkeit der Sicken hätte, ist die Zylinderkopfdichtung 16 wie üblich mit mindestens einem Verformungsbegrenzer für die Abdichtsicken versehen - ein solcher Verformungsbegrenzer wird üblicherweise und im Folgenden als Stopper bezeichnet. Bei der in Fig. 1 dargestellten Zylinderkopfdichtung 16 ist der mit 20 bezeichnete Stopper an der unteren Dichtungslage 16b angeordnet, umschließt die Brennraumöffnung 16c kreisringförmig und hat beispielsweise die Gestalt eines Metallblechrings, welcher an der unteren Dichtungslage 16b insbesondere durch Schweißen befestigt ist. Wie jeder Stopper muss auch der Stopper 20 so gestaltet sein und aus einem solchen Werkstoff bestehen, dass er gegenüber den bei der Montage der Zylinderkopfdichtung 16 und im Dichtungsbetrieb auftretenden Pressungskräften (gemäß Fig. 1 in vertikaler Richtung wirkende Kräfte) verformungssteif ist und seine Höhe höchstens unwesentlich ändert.

Außerdem muss die wirksame Höhe des Stoppers 20 so bemessen sein, dass bei der Montage der Zylinderkopfdichtung 16, das heißt beim Einspannen der Dichtung, die Höhe der Brennraum-Abdichtsicken 16d zwar etwas reduziert wird, die Abdichtsicken jedoch nicht unerwünscht stark abgeflacht werden.

Aus dem Stand der Technik sind vielerlei andere Ausführungsformen solcher Stopper bekannt, beispielsweise Stopper aus Materialaufträgen, wie aus sinterfähigem Pulver gesinterte Stopper, aber auch geprägte Stopper, das heißt Stopper, welche dadurch gebildet werden, dass das Blech einer oder beider Dichtungslagen mit geprägten Vorsprüngen versehen wird.

Zu der Fig. 1 ist ergänzend noch zu bemerken, dass bei eingebauter und gepresster Zylinderkopfdichtung 16 der Stopper 20 einen Verformungsbegrenzer für die Brennraum-Abdichtsicken 16d der beiden flexiblen Dichtungslagen 16b bildet.

Die Motor-Bauteile Motorblock und Zylinderkopf weisen üblicherweise verhältnismäßig große Hohlräume auf, und zwar auch in der Nähe der Zylinder-Brennräume; meist werden diese Hohlräume von Kühlwasser durchströmt oder dienen dem Rücklauf von Motoröl aus dem Zylinderkopf in den Motorblock und in eine unter dem Letzteren angeordnete Ölwanne. Ein solcher Hohlraum führt zu einer lokal geringeren Steifigkeit des mit dem Hohlraum versehenen Motor-Bauteils, insbesondere bei einem Zylinderkopf, da die Zylinderköpfe moderner Motoren aus Leichtmetalllegierungen hergestellt werden. Die Fig. 1 zeigt einen Teil eines solchen Hohlraums 22, bei dem es sich um einen Kühlwasser-Hohlraum handelt. Dieser führt verständlicherweise zu einer Verminderung der Steifigkeit des Motorbauteils, das heißt des Zylinderkopfs 14, und zwar nicht nur im Bereich des Hohlraums, sondern auch in der Nachbarschaft des Hohlraums. Da durch eine Zylinderkopfdichtung um die Zylinder-Brennräume herum gegen besonders hohe Mediendrücke abgedichtet werden muss, nämlich die Spitzendrücke der gezündeten Verbrennungsgase, werden die auf eine eingebaute Zylinderkopfdichtung einwirkenden Pressungskräfte vor allem auf die die Zylinder-Brennräume umschließenden Bereiche der Zylinderkopfdichtung konzentriert, so dass lokal geringere Steifigkeiten der Motorbauteile in der Nachbarschaft dieser Dichtungsbereiche verhältnismäßig große Auswirkungen haben, nämlich eine lokale Verringerung der Pressungskräfte, welche auf die die Zylinder-Brennräume umschließenden Bereiche der Zylinderkopfdichtung einwirken. Dies soll anhand der Fig. 1 verdeutlicht werden.

Wenn der Zylinderkopf 14 montiert ist und die den Zylinderkopf mit dem Motorblock 10 verspannenden Zylinderkopfschrauben vorschriftsmäßig angezogen sind, führen die auf den Zylinderkopf 14 einwirkenden Reaktionskräfte vor allem des Stoppers 20 ohne besondere Maßnahmen zu einer lokalen Verformung der über und unter dem Stopper 20 liegenden Bereiche der Motor-Bauteile, vor allem des Zylinderkopfs, so wie dies in Fig. 1 mit gestrichelten Linien angedeutet wurde - siehe die Einwölbung 24 und die Auswölbung 26 des Zylinderkopfs 14, welche den Brennraum 12 ungefähr kreisringförmig umgeben, wobei die Tiefe bzw. die Höhe der Einwölbung bzw. Auswölbung um den Brennraum 12 herum variieren kann. Der lokalen Verformung des Zylinderkopfs 14 könnte zwar beispielsweise dadurch entgegengewirkt werden, dass der Zylinderkopf im Bereich des Hohlraums 22 über dem Stopper 20 mit einer Abstützsicke versehen wird, was jedoch die Herstellung des den Zylinderkopf bildenden Gussteils komplizierter machen würde.

Da die Lagen einer metallischen Flachdichtung, vor allem aber die aus Federstahlblech bestehenden und als Funktionslagen gestalteten Dichtungslagen 16a, 16b flexibel sind, taucht bei der Montage der Zylinderkopfdichtung 16, das heißt beim vorschriftsmäßigen Anziehen der Zylinderkopfschrauben, der vom Stopper 20 definierte ringförmige Bereich der Zylinderkopfdichtung 16 in die entstandene Einwölbung 24 in der Dichtfläche 14a des Zylinderkopfs 14 ein, was bei dieser gemäß dem Stand der Technik ausgebildeten Flachdichtung zu einer lokalen Reduzierung der auf die Flachdichtung einwirkenden Pressungskräfte führt.

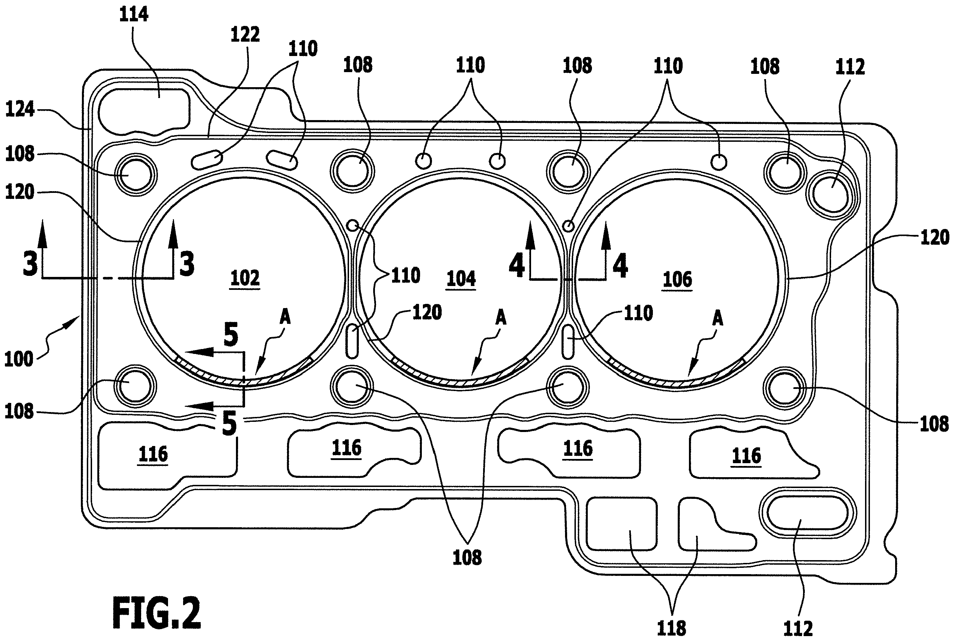

Die Fig. 2 zeigt eine Draufsicht auf eine als Zylinderkopfdichtung gestaltete erfindungsgemäße Flachdichtung, bei der es sich beispielsweise um eine Zylinderkopfdichtung für einen 3-Zylinder-Motor oder um eine Zylinderkopfdichtung für eine Zylinderbank eines als V-Motor gestalteten 6-Zylinder-Motors handeln kann.

Die als Ganzes mit 100 bezeichnete Zylinderkopfdichtung hat drei Brennraumöffnungen 102, 104 und 106, Schraubenlöcher 108 für den Durchtritt von Zylinderkopfschrauben, unterschiedlich gestaltete Wasserlöcher 110 für den Durchtritt von Kühlwasser, unterschiedlich gestaltete Druckölöffnungen 112 für den Durchtritt von unter Druck in einen Zylinderkopf gefördertes Motoröl sowie unterschiedlich gestaltete Ölrücklauföffnungen 114, 116 und 118 für den drucklosen Rücklauf von Motoröl aus dem Zylinderkopf durch einen Motorblock in eine Ölwanne des Motors.

Um die Brennraumöffnungen 102, 104, 106 herum wird mittels Brennraum-Abdichtsicken 120 abgedichtet, bei eingebauter Zylinderkopfdichtung mit Kühlwasser geflutete Dichtungsbereiche werden einerseits mit Hilfe der Brennraum-Abdichtsicken 120 und andererseits mit Wasser-Abdichtsicken 122 abgedichtet, und schließlich wird an der Peripherie der Zylinderkopfdichtung 100 mittels peripherer Abdichtsicken 124 abgedichtet.

Wie die Fig. 2 deutlich erkennen lässt, liegt in der Nachbarschaft der Reihe von Brennraumöffnungen 102, 104, 106 eine Reihe der verhältnismäßig großen Ölrücklauföffnungen 116, über welche dem Ölrücklauf dienende Ölkanäle entsprechend großen Querschnitts im Motorblock und im Zylinderkopf miteinander kommunizieren. Diese Ölkanäle großen Querschnitts haben vor allem im Zylinderkopf lokale Bauteilbereiche mit deutlich geringerer Bauteilsteifigkeit zur Folge, und diese Bereiche mit lokal deutlich verringerter Bauteilsteifigkeit führen zu den vorstehend im Zusammenhang mit Fig. 1 beschriebenen nachteiligen Folgen in denjenigen benachbarten und an die Brennraumöffnungen 102, 104, 106 angrenzenden Bereichen der Zylinderkopfdichtung 100, welche in Fig. 2 schraffiert und mit "A" gekennzeichnet wurden.

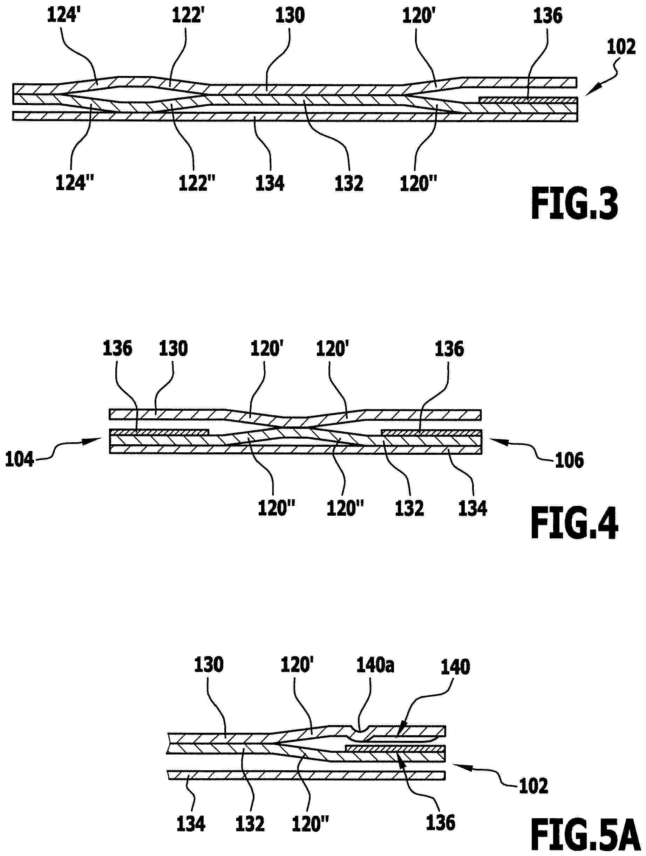

Wie die Fig. 2 in Verbindung mit den in den Figuren 3, 4 und 5A dargestellten Schnitten nach den Linien 3-3, 4-4 und 5-5 in Fig. 2 zeigen, besitzt die Zylinderkopfdichtung 100 eine von mehreren Dichtungslagen gebildete Dichtungsplatte mit beispielsweise drei Dichtungslagen, welche sich alle über die gesamte Zylinderkopfdichtung erstrecken, nämlich zwei sogenannte Funktionslagen und eine flache dritte Lage. Eine äußere Funktionslage 130 ist bei eingebauter Zylinderkopfdichtung insbesondere dem Zylinderkopf zugewandt und einer inneren Funktionslage 132 unmittelbar benachbart, und eine äußere Flachlage 134 ist bei eingebauter Zylinderkopfdichtung insbesondere dem Motorblock zugewandt. Während die beiden Funktionslagen 130, 132 aus einem Federstahlblech hergestellt sind, welches auch bei den Betriebstemperaturen der Zylinderkopfdichtung seine federelastischen Eigenschaften besitzt, kann die Flachlage 134 aus einem billigeren Stahlblech hergestellt werden.

Wie sich vor allem aus einem Vergleich der Figuren 2 und 3 ergibt, werden die Funktionen der in Fig. 2 gezeigten Brennraum-Abdichtsicken 120, der Wasser-Abdichtsicke 122 und der peripheren Abdichtsicke 124 von jeweils zwei Abdichtsicken der Funktionslagen 130 und 132 übernommen; die Funktion der Abdichtung der Brennraumöffnungen 102, 104, 106 wird nämlich von jeweils zwei übereinander angeordneten und als Halbsicken gestalteten Sicken 120' und 120" übernommen, die Funktion der Wasser-Abdichtsicke 122 von zwei übereinander angeordneten Halbsicken 122' und 122", und die Funktion der peripheren Abdichtsicke 124 von zwei übereinander angeordneten Halbsicken 124' und 124".

Insbesondere die Brennraum-Abdichtsicken könnten, anders als in den Figuren 3, 4 und 5A dargestellt, statt als Halbsicken auch als Vollsicken gestaltet sein, so wie dies aus der Fig. 1 ersichtlich wird. Der Stopper 136 und das erfindungsgemäße Bauteil-Abstützelement 140 liegen in beiden Fällen unmittelbar neben oder in der unmittelbaren Nachbarschaft der jeweils zugehörigen Brennraum-Abdichtsicke.

Den Figuren 3 und 4 lässt sich entnehmen, dass die Brennraumöffnungen 102, 104, 106 jeweils von einem Stopper 136 umschlossen werden, welcher radial innerhalb (von der jeweiligen Brennraumöffnung aus gesehen) von den Brennraum-Abdichtsicken 120', 120" liegt und diesen unmittelbar benachbart ist; insbesondere grenzt der Stopper 136 an die jeweilige Brennraumöffnung und die jeweiligen Brennraum-Abdichtsicken unmittelbar an (in einer Draufsicht auf die Zylinderkopfdichtung). Bei dem Stopper 136 kann es sich um einen Stahlblechring handeln, welcher an einer der beiden Funktionslagen 130, 132 insbesondere durch eine umlaufende Schweißnaht befestigt ist und dessen Dicke so bemessen ist, dass er bei eingebauter und gepresster Zylinderkopfdichtung für beide Sicken 120' und 120" als Verformungsbegrenzer wirkt. Die Dicke des Stoppers 136 muss also kleiner sein als die Summe der Höhen der Sicken 120' und 120", wobei die Stopperdicke so bemessen ist, dass die beiden Sicken 120' und 120" bei der Montage und im Betrieb der Zylinderkopfdichtung nicht unerwünscht stark abgeflacht werden, jedoch den betriebsbedingten Schwankungen der Höhe oder Dicke des sogenannten Dichtspalts federelastisch folgen können, welcher von den einander zugewandten Dichtflächen von Motorblock und Zylinderkopf gebildet wird und die Zylinderkopfdichtung aufnimmt.

Jedem der Stopper 136 ist in dem in Fig. 2 mit A bezeichneten Bereich ein erfindungsgemäßes Bauteil-Abstützelement zugeordnet, und anhand des in Fig. 5A dargestellten Schnitts nach der Linie 5-5 in Fig. 2 soll exemplarisch ein solches Bauteil-Abstützelement erläutert werden, welches gemäß einer ersten Ausführungsform ausgebildet ist.

Längs des in Fig. 2 mit A bezeichneten Bereichs ist über dem Stopper 136 (gemäß Fig. 5A links des Stoppers 136) die Funktionslage 130 mit einem erfindungsgemäßen Bauteil-Abstützelement 140 versehen, welches sich nur längs des Bereichs A erstreckt und in einer Draufsicht auf die Zylinderkopfdichtung den Stopper 136 quer zu seiner Längserstreckung nicht überragt. Bei der in Fig. 5A dargestellten Ausführungsform bildet das Bauteil-Abstützelement 140 einen über die Funktionslage 130 in Richtung auf den Stopper 136 vorstehenden Vorsprung, grundsätzlich wäre es aber auch möglich, dass dieses Abstützelement auf der Außenseite der Zylinderkopfdichtung einen Vorsprung bildet. Für jeden dieser Fälle wird auf die vorstehende Beschreibung der Fig. 1 bezüglich des Eintauchens eines Bereichs der Zylinderkopfdichtung 16 in die Einwölbung 24 verwiesen.

Durch das nur über einen Längsabschnitt des Stoppers 136 vorgesehene Abstützelement 140 wird erfindungsgemäß das lokale Eintauchen der Zylinderkopfdichtung in einen Bereich mit lokal geringerer Bauteilsteifigkeit des Zylinderkopfs kompensiert.

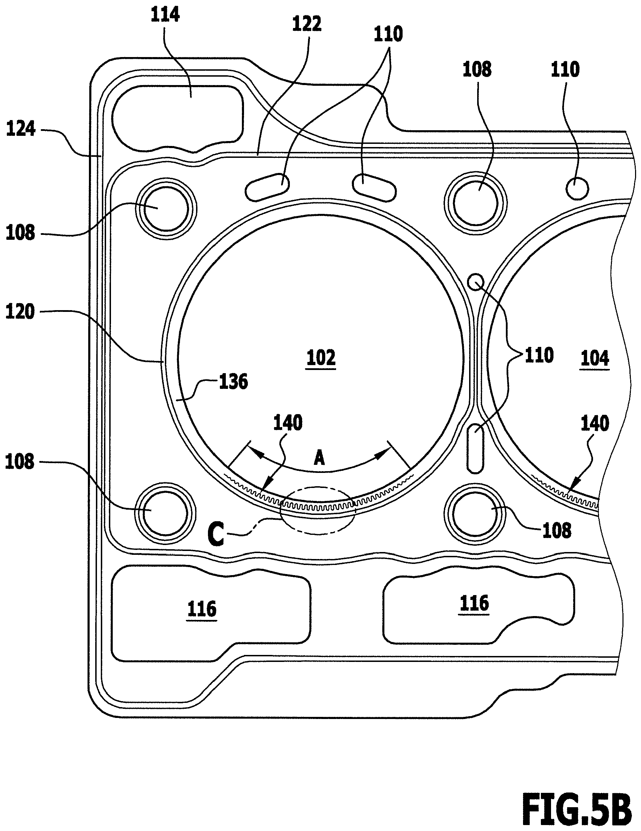

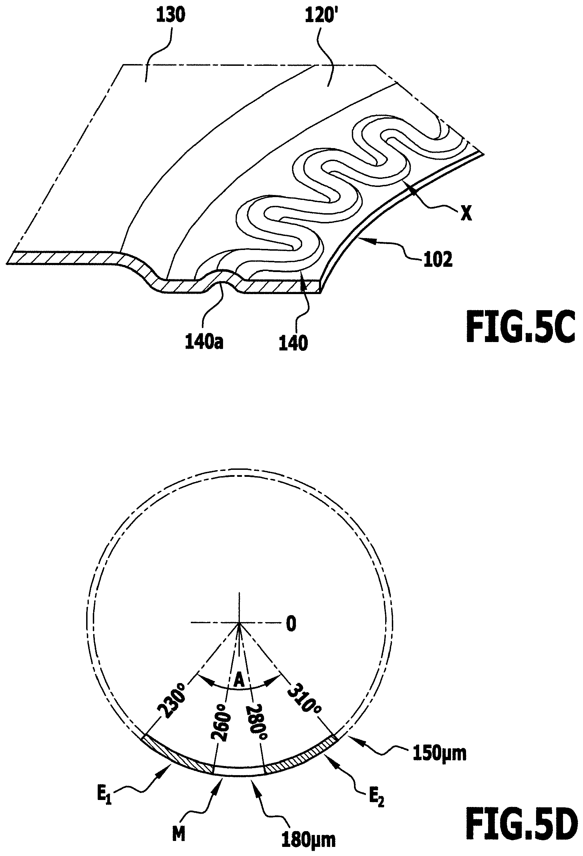

Die in Fig. 5A gezeigte Ausführungsform eines erfindungsgemäßen Bauteil-Abstützelements entspricht dem in den nachfolgend noch zu beschreibenden Figuren 5B und 5C dargestellten Bauteil-Abstützelement, woraus sich die in Fig. 5A erkennbare Einprägung 140a erklärt.

Eine bevorzugte Ausführungsform eines erfindungsgemäßen Bauteil-Abstützelements wie des Abstützelements 140 wird im Folgenden anhand der Figuren 5B und 5C erläutert.

In der Fig. 5B wurde der in Fig. 2 für die Brennraumöffnung 102 erkennbare Bereich A markiert, und längs des sich über den Bereich A erstreckenden Längsabschnitts des Stoppers 136 erstreckt sich das in Fig. 5A erkennbare Bauteil-Abstützelement 140, welches in diesem Fall als aus der Funktionslage 130 herausgeprägte Sicke mit mäanderförmigem Verlauf (in einer Draufsicht auf die Zylinderkopfdichtung) ausgebildet ist.

Die Fig. 5C zeigt einen Bereich der Funktionslage 130 entsprechend dem Ausschnitt C aus Fig. 5B.

Eine das Bauteil-Abstützelement 140 bildende Sicke 140a mit in einer Draufsicht mäanderförmigem Verlauf besteht aus aufeinanderfolgenden und ineinander übergehenden Mäanderbögen oder -schlingen, welche in Längsrichtung der Mäanderform bzw. des Bauteil-Abstützelements 140 eine möglichst große "Packungsdichte" aufweisen, das heißt die Schenkel der im Wesentlichen U-förmigen Mäanderbereiche sollten in Längsrichtung des Bauteil-Abstützelements 140 mit möglichst geringen Abständen voneinander aufeinander folgen, damit das Bauteil-Abstützelement möglichst verformungssteif ist, das heißt den bei eingebauter Zylinderkopfdichtung auf das Bauteil-Abstützelement einwirkenden Pressungskräften einen so hohen Widerstand entgegensetzen kann, dass das Bauteil-Abstützelement höchstens unwesentlich verformt wird. Hierzu ist es auch empfehlenswert, den Querschnitt der Sicke so zu gestalten, dass das Verhältnis Sickenhöhe zu Sickenbreite möglichst groß ist bzw. die beiden seitlichen Flanken der Sicke möglichst steil sind.

Die mäanderförmige Sicke weist bevorzugt ein Höhenprofil dergestalt auf, dass die Sickenhöhe in einem Mittelbereich der Mäandersicke zumindest im Wesentlichen konstant ist und in sich an den Mittelbereich anschließenden Endbereichen in Richtung auf die Sickenenden vorzugsweise stetig bis auf Null abnimmt.

Ferner empfiehlt es sich, die Breite der Mäandersicke in deren Endbereichen gegen die Sickenenden zu insbesondere stetig zu reduzieren, so wie dies die Fig. 5B erkennen lässt.

Die Stelle der in Fig. 5A erkennbaren Einprägung 140a wurde in Fig. 5C mit X gekennzeichnet.

Anhand der Fig. 5D wird im Folgenden das Höhenprofil einer bevorzugten Ausführungsform des erfindungsgemäßen Ensembles aus einem Stopper und einem Bauteil-Abstützelement erläutert.

In Fig. 5D sollen die beiden konzentrischen strichpunktierten Kreise einen Stopper wie den Stopper 136 und ein darüber angeordnetes Bauteil-Abstützelement (in der Draufsicht) repräsentieren, und in Fig. 5D wurde derjenige Bereich dieses Ensembles wiederum mit A gekennzeichnet, in welchem über einem Längsabschnitt des Stoppers das Bauteil-Abstützelement vorgesehen ist.

Da die Fig. 5D ein zur Fig. 2 passendes Ensemble erläutern soll, wurde in Fig. 5D die Längsrichtung der in Fig. 2 dargestellten Zylinderkopfdichtung mit 0° bezeichnet, und der Winkelbereich zwischen 180° und 360° soll den Ölrücklauföffnungen 116 zugewandt sein. Das Bauteil-Abstützelement erstreckt sich also über den Winkelbereich zwischen 230° und 310°.

In Fig. 5D wurde ein mittlerer Bereich des Ensembles aus Stopper und Bauteil-Abstützelement mit M gekennzeichnet, und die sich an diesen mittleren Bereich zu beiden Seiten anschließenden und sich bis zu den Längsenden des Bauteil-Abstützelements erstreckenden Endbereiche wurden schraffiert und mit $E_1$ sowie $E_2$ gekennzeichnet.

Der mittlere Bereich M erstreckt sich also über den Winkelbereich von 260° bis 280°, das heißt über 20°, der Endbereich $E_1$ über den Winkelbereich von 230° bis 260°, das heißt über einen Winkelbereich von 30°, und der Endbereich $E_2$ erstreckt sich über den Winkelbereich von 280° bis 310°, das heißt über einen Winkelbereich von gleichfalls 30°.

Für das Höhenprofil des Ensembles aus Stopper und Bauteil-Abstützelement wurde angenommen, dass die wirksame Höhe bzw. Dicke des Stoppers überall gleich, das heißt konstant ist und nur die Höhe des Bauteil-Abstützelements längs des Stoppers variiert. Für die in Fig. 5D angegebenen wirksamen Höhen des Ensembles aus Stopper und Bauteil-Abstützelement wurde angenommen, dass die überall gleiche Höhe des Stoppers 150 $\mu$m beträgt und die wirksame Höhe des Bauteil-Abstützelements entlang des Abstützelements zwischen 30 $\mu$m und 0 $\mu$m (Letzteres an den beiden Enden des Abstützelements) variiert.

Im mittleren Bereich M soll die wirksame Höhe des Bauteil-Abstützelements konstant sein und 30 $\mu$m betragen, so dass in diesem Bereich die Gesamthöhe des Ensembles aus Stopper und Bauteil-Abstützelement gleichfalls konstant ist und 180 $\mu$m beträgt. Ausgehend vom mittleren Bereich M soll die wirksame Höhe des Bauteil-Abstützelements von 30 $\mu$m stetig auf 0 $\mu$m abnehmen.

EP 3 380 760 B1

Dieses Höhenprofil des Ensembles aus Stopper und Bauteil-Abstützelement geht von der durch Fig. 2 verdeutlichten Überlegung aus, dass die Bauteilsteifigkeit vor allem des Zylinderkopfs in den den geringsten Abstand von den in die Ölrücklauföffnungen 116 mündenden Bauteil-Hohlräumen aufweisenden Bereichen des Zylinderkopfs am geringsten ist und mit zunehmendem Abstand von diesen Hohlräumen wieder größer wird.

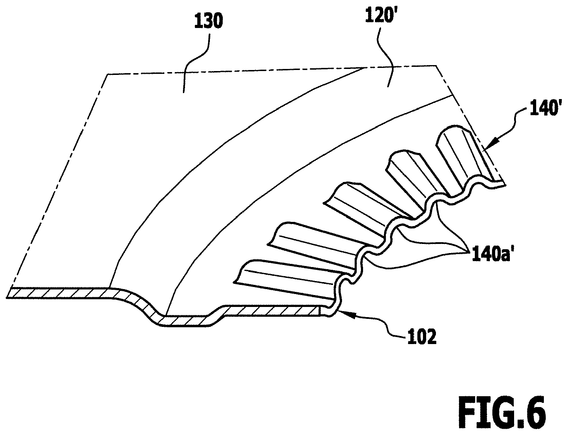

Die Fig. 6 zeigt eine gegenüber der Fig. 5C abgewandelte Ausführungsform des Bauteil-Abstützelements 140, nämlich ein Bauteil-Abstützelement 140', welches von einer Vielzahl von kurzen, radial verlaufenden und gegebenenfalls in Umfangsrichtung voneinander beabstandeten Sicken 140a' gebildet wird.

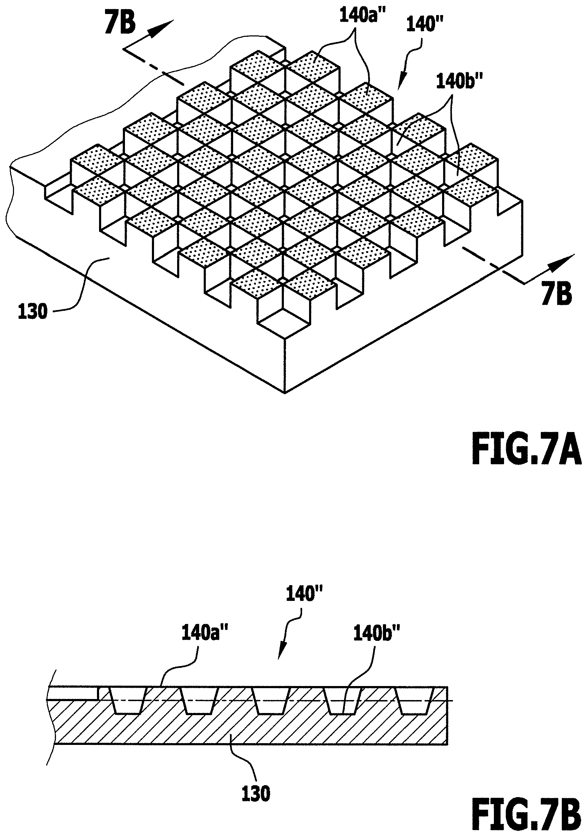

Eine weitere Ausführungsform eines erfindungsgemäßen Bauteil-Abstützelements ist in den Figuren 7A und 7B dargestellt, welche kleine Ausschnitte aus einem Bereich der Funktionslage 130 zeigen, der mit einem erfindungsgemäßen Bauteil-Abstützelement versehen ist. Es muss aber darauf hingewiesen werden, dass wenn eine erfindungsgemäße Flachdichtung einen anderen Aufbau hat als die zeichnerisch dargestellte Zylinderkopfdichtung, das Bauteil-Abstützelement auch an einer anderen Dichtungslage als einer Funktionslage, nämlich insbesondere an einer zumindest im Wesentlichen flachen Dichtungslage vorgesehen sein könnte, die zum Beispiel an die Stelle der Funktionslage 132 tritt, wobei der Stopper 136 dann bevorzugt an der Funktionslage 130 angebracht wäre.

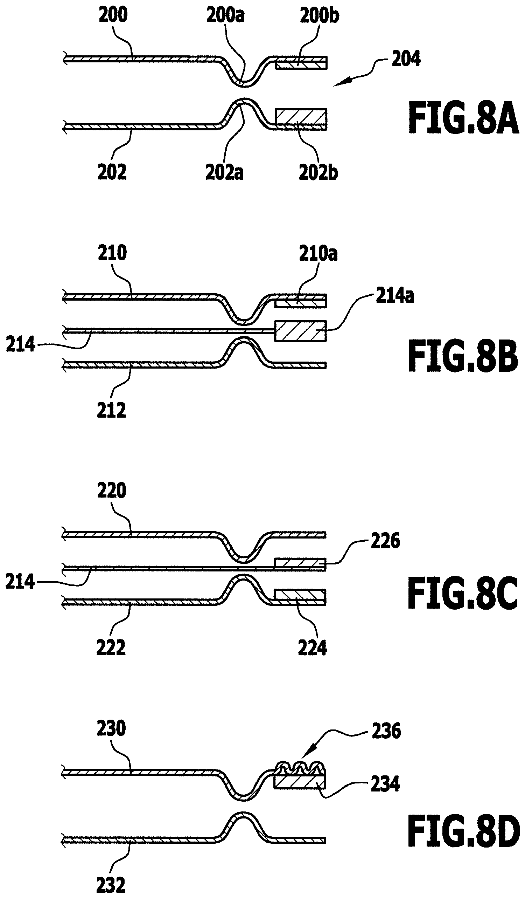

In diesem Zusammenhang wird auch auf die noch zu erörternden Figuren 8A bis 8D verwiesen.

Bei der Ausführungsform gemäß den Figuren 7A und 7B wurde die Dichtungslage 130 zur Bildung eines Bauteil-Abstützelements 140" durch Prägen mit einem insbesondere regelmäßigen Muster aus Erhebungen oder Vorsprüngen 140a" und Vertiefungen 140b" versehen, wobei das beim Prägen der Vertiefungen 140b" verdrängte Material die Vorsprünge 140a" bildet. Ein solches Bauteil-Abstützelement ist infolge der beim Prägen entstehenden Kaltverfestigung des Stahls gegenüber Pressungskräften besonders widerstandsfähig.

Die Figuren 8A bis 8D zeigen schematische Schnittdarstellungen von Bereichen erfindungsgemäßer Flachdichtungen mit unterschiedlichem Aufbau.

Die Fig. 8A zeigt übereinander angeordnete Bereiche zweier Funktionslagen 200 und 202 mit übereinander angeordneten Abdichtsicken 200a und 202a. Gemäß Fig. 8A soll sich rechts von den gezeichneten Bereichen der Funktionslagen 200 und 202 eine Medien-Durchgangsöffnung 204 befinden, welcher benachbart die Funktionslage 202 mit einem Stopper 202b und die Funktionslage 200 mit einem Bauteil-Abstützelement 200b versehen ist.

Die Fig. 8B zeigt eine dreilagige Flachdichtung mit zwei den Funktionslagen 200 und 202 der Flachdichtung gemäß Fig. 8A entsprechenden Funktionslagen 210 und 212 sowie einer zwischen den beiden Funktionslagen angeordneten sogenannten Stopperlage 214, bei welcher es sich um eine flache Lage mit einem Stopper 214a handelt. Über einem Längsabschnitt des Stoppers 214a ist die Funktionslage 210 mit einem erfindungsgemäßen Bauteil-Abstützelement 210a versehen.

Die Fig. 8C zeigt gleichfalls eine dreilagige Flachdichtung, welche weitgehend der in Fig. 8B dargestellten Flachdichtung entspricht, sich von dieser jedoch dadurch unterscheidet, dass zwischen zwei Funktionslagen 220 und 222 eine sogenannte Distanzlage 224 angeordnet ist, bei der es sich um eine flache Dichtungslage handelt. Die Funktionslage 222 ist mit einem Stopper 224 versehen, und über einem Längsabschnitt dieses Stoppers weist die Distanzlage 224 ein erfindungsgemäßes Bauteil-Abstützelement 226 auf.

Die Fig. 8D zeigt eine zweilagige, der in Fig. 8A dargestellten Flachdichtung sehr ähnliche Flachdichtung mit zwei Funktionslagen 230 und 232 und einem an der Funktionslage 230 vorgesehenen Stopper 234. Über einem Längsabschnitt des Stoppers 234 ist die Funktionslage 230 mit einem durch Prägen des Blechs der Funktionslage 230 erzeugten erfindungsgemäßen Bauteil-Abstützelement 236 versehen, welches so ausgebildet sein kann, wie dies die Figuren 5C, 6 oder 7A zeigen. Bei der Ausführungsform gemäß Fig. 8D sind also ein Stopper und ein Bauteil-Abstützelement an ein und derselben Dichtungslage vorgesehen. Bei der Herstellung der in Fig. 8D gezeigten Flachdichtung wird bevorzugt so vorgegangen, dass zunächst das Bauteil-Abstützelement 236 geprägt und dann der Stopper 234 an der Funktionslage 230 angebracht wird.

Bei allen in den Figuren 8A bis 8D dargestellten Ausführungsformen soll der Stopper gleichfalls so dimensioniert sein, dass er für die Abdichtsicken beider Funktionslagen (aufgrund ihrer Flexibilität) die Funktion eines Verformungsbegrenzers ausüben kann.

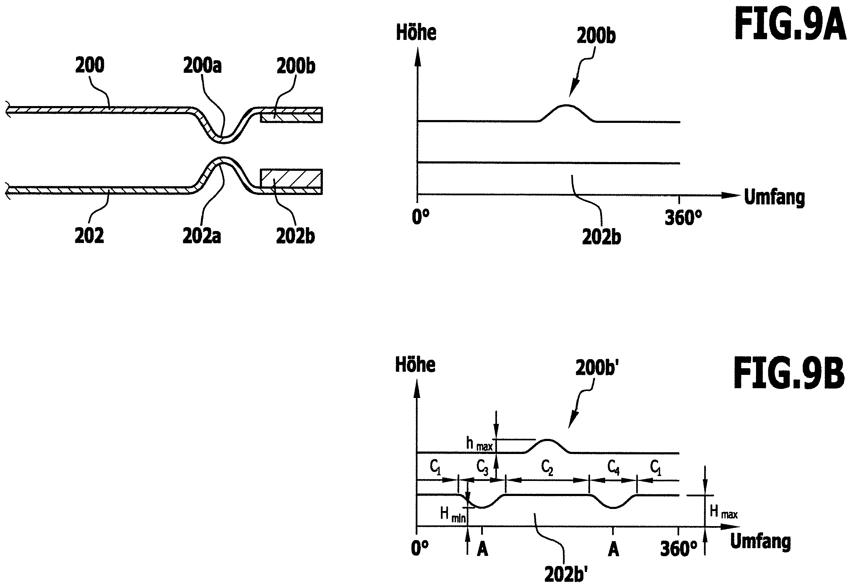

In Fig. 9A ist links die Schnittdarstellung der Fig. 8A wiedergegeben, und im rechten Teil der Fig. 9A ist ein Diagramm dargestellt, welches unten eine schematische Abwicklung des Stoppers 202b über 360° und darüber eine Abwicklung des Höhenprofils des Bauteil-Abstützelements 200b zeigt, welches jedoch nur über einem Längsabschnitt des Stoppers vorgesehen ist, so dass die obere Kurve dieses Diagramms nicht so verstanden werden darf als ob sich das Bauteil-Abstützelement über den ganzen Umfang des Stoppers erstrecken würde. Außerdem ergibt sich aus einem Vergleich dieses Diagramms mit der Schnittdarstellung der Zylinderkopfdichtung im linken Teil der Fig. 9A, dass, obwohl das Bauteil-Abstützelement 200b nach unten, das heißt in Richtung auf die Funktionslage 202, vorspringt, mit dem im rechten Teil der Fig. 9A gezeigten Diagramm nur die gesamte Höhe des Ensembles aus dem Stopper 202b und dem Bauteil-Abstützelement 200b wiedergegeben werden soll.

Das im rechten Teil der Fig. 9A gezeigte Diagramm gibt also rein qualitativ dasjenige wieder, was vorstehend in Verbindung mit der Fig. 5D beschrieben wurde, nämlich dass die wirksame Gesamthöhe bzw. -dicke des Ensembles

12

aus dem Stopper 202b und dem Bauteil-Abstützelement 200b außerhalb des Bereichs des Bauteil-Abstützelements konstant ist und im Bereich des Bauteil-Abstützelements 200b längs des Stoppers 202b zunächst bis auf ein Maximum zunimmt und dann wieder auf Null abfällt.

Die Fig. 9B zeigt ein Diagramm, welches dem im rechten Teil der Fig. 9A dargestellten Diagramm entspricht, jedoch eine andere Ausführungsform der Erfindung betrifft. Während nämlich bei den dem Diagramm der Fig. 9A entsprechenden Ausführungsformen eine lokal geringere Steifigkeit der Bauteile, zwischen denen die Flachdichtung eingespannt wird, nur durch ein erfindungsgemäßes Bauteil-Abstützelement kompensiert wird, da der zugehörige Stopper überall dieselbe Höhe bzw. Dicke aufweist, sind bei dem in Fig. 9B dargestellten Diagramm entsprechenden Ausführungsformen der erfindungsgemäßen Flachdichtung die Maßnahmen zur Vergleichmäßigung der Pressung des Ensembles aus Stopper und Bauteil-Abstützelement auf diese beiden Elemente der Flachdichtung aufgeteilt, indem auch der Stopper ein Höhenprofil aufweist, nämlich eine längs des Stoppers variierende Höhe bzw. Dicke.

Im Diagramm der Fig. 9B wurde für den Stopper das Bezugszeichen 202b' und für das Bauteil-Abstützelement das Bezugszeichen 200b' verwendet. Außerdem wurden in der Abszisse dieses Diagramms mit A zwei Stellen des Stopper-Umfangs gekennzeichnet, welche Schraubenlöchern der Flachdichtung für den Durchtritt von dem Einspannen der Flachdichtung dienenden Montageschrauben am nächsten liegen.

Wie sich aus der unteren Kurve des in Fig. 9B dargestellten Diagramms ergibt, hat der Stopper 202b' längs seines Umfangs in zwei ersten Längsabschnittbereichen $C_1$ und $C_2$ eine konstante maximale Höhe $H_{max}$, während die Stopperhöhe in zwei zweiten Längsabschnittbereichen $C_3$ und $C_4$ des Stoppers zwischen $H_{max}$ und $H_{min}$ variiert, wobei der Stopper 202b' an den Stellen A seine kleinste Höhe $H_{min}$ aufweist und die Stopperhöhe in den Längsabschnittbereichen $C_3$ und $C_4$ zu beiden Seiten der jeweiligen Stelle A zunimmt, und zwar bis auf den Wert $H_{max}$.

Erfindungsgemäß ist nun die maximale Höhe $H_{max}$ des Stoppers 202b' bzw. seines Höhenprofils gegenüber einer für die Pressungsvergleichmäßigung erforderlichen theoretischen maximalen Höhe des Stoppers bzw. seines Höhenprofils reduziert, und zwar vorzugsweise um höchstens 50 % der Differenz zwischen $H_{max}$ und $H_{min}$, und diese Reduktion der maximalen Höhe des Stoppers bzw. seines Höhenprofils wird durch das erfindungsgemäße Bauteil-Abstützelement 200b' kompensiert, dessen Höhenprofil durch die obere Kurve des in Fig. 9B gezeigten Diagramms wiedergegeben wird.

Das in Fig. 9B dargestellte Diagramm geht von der Annahme aus, dass mindestens eines der Bauteile, zwischen denen die erfindungsgemäße Flachdichtung eingespannt ist, über bzw. unter dem Längsabschnittbereich $C_2$ des Stoppers 202b' lokal eine verringerte Bauteilsteifigkeit aufweist, welche durch das Bauteil-Abstützelement 200b' zumindest nahezu ausgeglichen werden soll. Damit für das Erreichen dieses Ausgleichs ein für den Stopper 202b' verwendeter Rohling durch Prägen nicht allzu stark verformt, das heißt mit einem Höhenprofil mit großen Höhenunterschieden versehen werden muss, weist der Stopper 202b' in den Bereichen seiner den Montageschrauben nächstliegenden Stellen A, nämlich in seinen Längsabschnittbereichen $C_3$ und $C_4$ nur verhältnismäßig wenig tiefe Einprägungen mit einer maximalen Tiefe von beispielsweise 20 $\mu$m auf und besitzt das Bauteil-Abstützelement 200b' ein Höhenprofil mit einer maximalen Höhe $H_{max}$ von beispielsweise 30 $\mu$m.

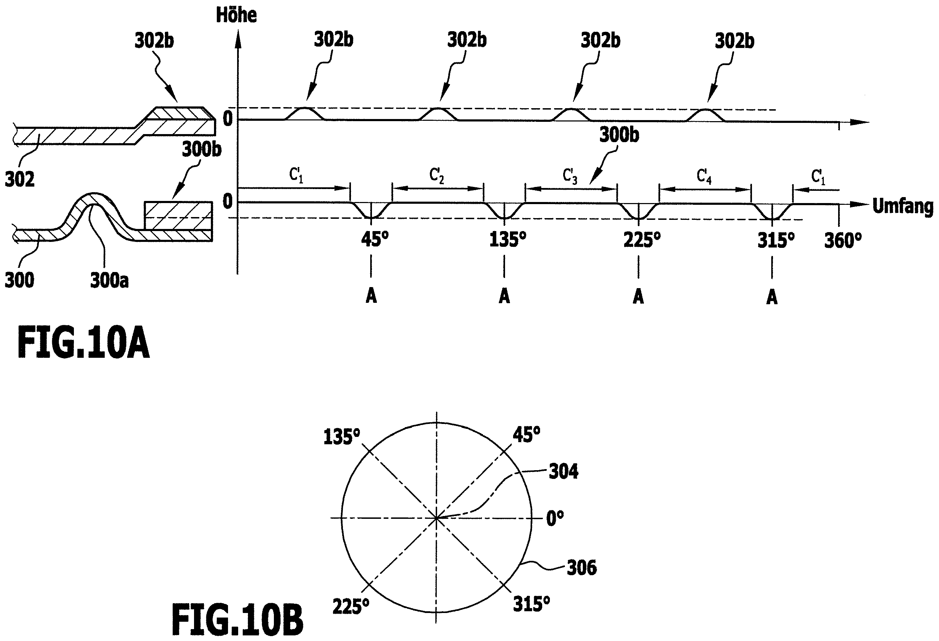

Die der Fig. 9A ähnliche Fig. 10A zeigt links einen schematischen Schnitt durch Teile zweier Dichtungslagen einer erfindungsgemäßen Flachdichtung und rechts ein Diagramm, in welchem unten ein Höhenprofil eines Stoppers und oben die Höhenprofile mehrerer diesem Stopper zugeordneten erfindungsgemäßen Bauteil-Abstützelemente schematisch dargestellt sind. Das Grundprinzip dieses Ensembles aus einem Stopper und Bauteil-Abstützelementen entspricht im Wesentlichen dem Grundprinzip des zur Fig. 9B gehörenden Ensembles aus einem Stopper und einem Bauteil-Abstützelement.

Die Schnittdarstellung im linken Teil der Fig. 10A zeigt einen Teil einer als sogenannte Funktionslage gestalteten Dichtungslage 300 und einen über diesem Dichtungslagenteil befindlichen Teil einer weiteren Dichtungslage 302, bei der es sich um eine sogenannte Distanzlage oder eine sogenannte Trägerlage handeln soll - die Dichtungslage 302 wird deshalb im Folgenden als Trägerlage bezeichnet.

Die Funktionslage 300 aus einem Federstahlblech ist mit einer Abdichtsicke 300a für eine Medien-Durchgangsöffnung sowie mit einem Stopper 300b versehen, wobei diese Medien-Durchgangsöffnung gemäß Fig. 10A rechts vom Stopper 300b liegen soll und von Letzterem sowie der Abdichtsicke 300a umschlossen wird. Die Trägerlage 302 weist über dem Stopper 300b mehrere in Umfangsrichtung der Medien-Durchgangsöffnung im Abstand voneinander angeordnete erfindungsgemäße Bauteil-Abstützelemente 302b auf, welche bevorzugt von durch Prägen des Blechs der Trägerlage 302 erzeugten Vorsprüngen gebildet werden.

Die Fig. 10B zeigt ähnlich wie die Fig. 5D eine schematische Skizze für ein Ensemble aus einem Stopper und diesem zugeordneten Bauteil-Abstützelementen, wobei dieses Ensemble lediglich durch einen Kreis repräsentiert wird, und diese Skizze dient lediglich dem Zweck, die Winkelpositionen von dem Durchtritt von Montageschrauben dienenden Schraubenlöchern einer erfindungsgemäßen Flachdichtung ersichtlich zu machen. In Fig. 10B wurde die Achse der erwähnten Medien-Durchgangsöffnung, beispielsweise also einer Brennraumöffnung einer Zylinderkopfdichtung, mit 304 und der das Ensemble aus Stopper und Bauteil-Abstützelementen repräsentierende Kreis mit 306 bezeichnet. Die dem erwähnten Ensemble benachbarten Schraubenlöcher sind in Fig. 10B nicht dargestellt, jedoch wurden die Winkelpositionen dieser Schraubenlöcher angegeben, nämlich bei 45°, 135°, 225° und 315°.

Die den Figuren 10A und 10B zugrundeliegende Ausführungsform einer erfindungsgemäßen Flachdichtung entspricht der der Fig. 9B zugrundeliegenden Ausführungsform, von welcher sich die der Fig. 10A zugrundeliegende Ausführungsform dadurch unterscheidet, dass Letztere mehrere erfindungsgemäße Bauteil-Abstützelemente aufweist.

In dem in Fig. 10A rechts gezeigten Diagramm ist unten das Höhenprofil des Stoppers 300b dargestellt, und in der Abszisse dieses Diagramms sind die den Schraubenlöchern der Flachdichtung nächstliegenden Stellen des Stoppers 300b mit A gekennzeichnet, nämlich bei 45°, 135°, 225° und 315° der Abwicklung des Stoppers.

Analog der Darstellung in Fig. 9B wurden in Fig. 10A vier erste Längsabschnittbereiche des Stoppers 300b mit $C_1'$, $C_2'$, $C_3'$ und $C_4'$ gekennzeichnet, und zwischen diesen ersten Längsabschnittbereichen hat der Stopper 300b jeweils einen von insgesamt vier zweiten Längsabschnittbereichen, in welchen der Stopper mit jeweils einer Einprägung versehen ist. In den vier ersten Längsabschnittbereichen $C_1'$ bis $C_4'$ hat der Stopper 300b stets dieselbe konstante Höhe, nämlich seine maximale Höhe, während in jedem der zweiten Längsabschnittbereiche, welche zwischen den ersten Längsabschnittbereichen $C_1'$ bis $C_4'$ liegen, die Höhe des Stoppers zwischen seiner maximalen Höhe und einer minimalen Höhe variiert.

In dem in Fig. 10A rechts gezeigten Diagramm sind über dem Höhenprofil des Stoppers 300b die Höhenprofile der erfindungsgemäßen Bauteil-Abstützelemente 302b dargestellt, wobei die der Fig. 10A zugrundeliegende Ausführungsform der erfindungsgemäßen Flachdichtung für den Stopper 300b vier solche Bauteil-Abstützelemente aufweist, von denen jeweils eines über jeweils einem der ersten Längsabschnittbereiche $C_1'$ bis $C_4'$ angeordnet ist.

Bei der der Fig. 10A zugrundeliegenden Ausführungsform der erfindungsgemäßen Flachdichtung ist die maximale Höhe der Bauteil-Abstützelemente 302b vorzugsweise etwas kleiner als die maximale Reduzierung der Höhe des Stoppers 300b zwischen dessen Längsabschnittbereichen $C_1'$ bis $C_4'$; beispielsweise beträgt die maximale Höhe der Bauteil-Abstützelemente 302b ca. 20 $\mu$m, während die Höhe des Stoppers 300b zwischen dessen Längsabschnittbereichen $C_1'$ bis $C_4'$ gegenüber der maximalen Stopperhöhe um maximal ca. 30 $\mu$m reduziert wurde.

Im Übrigen kann bezüglich der der Fig. 10A zugrundeliegenden Ausführungsform der erfindungsgemäßen Flachdichtung auf die vorstehenden Erläuterungen zur Fig. 9B verwiesen werden.

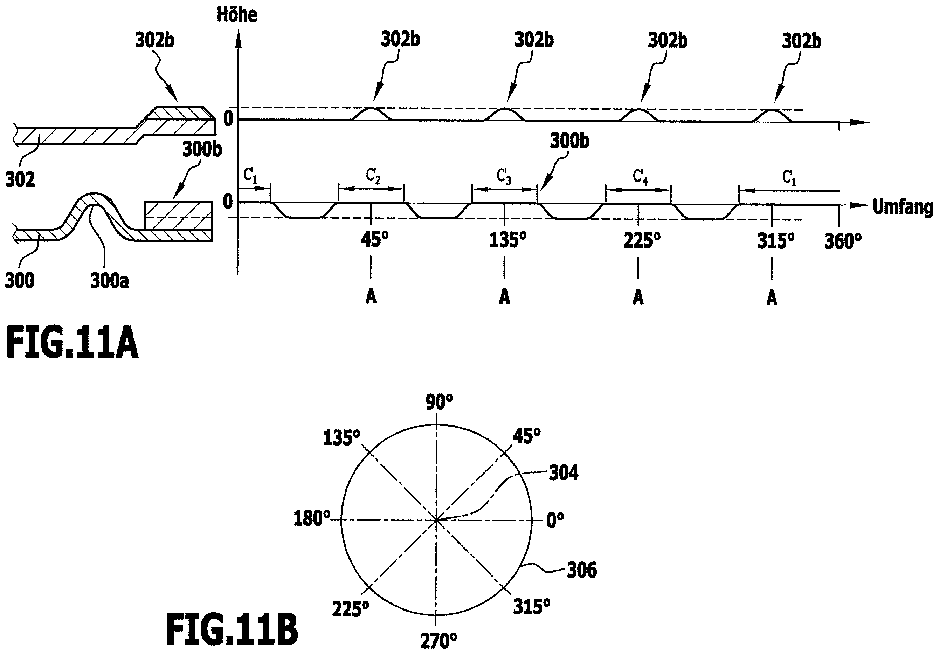

Die Figuren 11A und 11B entsprechen den Figuren 10A und 10B; während jedoch bei der der Fig. 10A zugrundeliegenden Ausführungsform der erfindungsgemäßen Flachdichtung die Höhe bzw. Dicke des Stoppers 300b in den den Schraubenlöchern am nächsten liegenden Stopperbereichen reduziert ist, liegt der Fig. 11A eine Ausführungsform der erfindungsgemäßen Flachdichtung zugrunde, bei welcher die Höhe des Stoppers in denjenigen Stopperbereichen reduziert ist, welche sich zwischen den den Schraubenlöchern am nächsten liegenden Stopperbereichen befinden.

In den Figuren 11A und 11B wurden dieselben Bezugszeichen wie in den Figuren 10A und 10B verwendet, und die Figuren 11A und 11B werden im Folgenden auch nur insoweit beschrieben, als sie von den Figuren 10A und 10B abweichen.

Bei der den Figuren 11A und 11B zugrundeliegenden Ausführungsform der erfindungsgemäßen Flachdichtung befinden sich die dem Stopper 300b am nächsten liegenden Schraubenlöcher bezüglich der Achse 304 der Medien-Durchgangsöffnung gleichfalls in den Winkelpositionen 45°, 135°, 225° und 315° (siehe Fig. 11B), und in dem Diagramm der Fig. 11A wurden die den Schraubenlöchern am nächsten liegenden Stellen des Stoppers 300b wieder mit A gekennzeichnet. Wie sich aus dem im Diagramm der Fig. 11A unten dargestellten Höhenprofil des Stoppers 300b ergibt, hat der Stopper in ersten Längsabschnittbereichen $C_1'$ bis $C_4'$ überall dieselbe konstante Höhe bzw. Dicke, nämlich seine maximale Höhe bzw. Dicke, während die Stopperhöhe in zwischen den Längsabschnittbereichen $C_1'$ bis $C_4'$ liegenden zweiten Längsabschnittbereichen zwischen der maximalen Stopperhöhe und einer minimalen Stopperhöhe variiert. Diese zweiten Längsabschnittbereiche des Stoppers mit variierender Stopperhöhe stellen die sogenannten Zwischenschraubenbereiche des Stoppers dar, in denen die Stopperhöhe, vorzugsweise durch Prägen des Stoppers, reduziert wurde.

In dem Diagramm der Fig. 11A sind über dem Höhenprofil des Stoppers 300b die Positionen und Höhenprofile der erfindungsgemäßen Bauteil-Abstützelemente 302b dargestellt, welche wie bei der der Fig. 10A zugrundeliegenden Ausführungsform der erfindungsgemäßen Flachdichtung über den Stopper-Längsabschnittbereichen $C_1'$ bis $C_4'$ mit der größten Stopperhöhe angeordnet sind und deren maximale Höhe etwas kleiner sein kann als die maximale Tiefe des Stopper-Höhenprofils in den sogenannten Zwischenschraubenbereichen. Beispielsweise beträgt die maximale Höhe der Bauteil-Abstützelemente 302b ca. 20 $\mu$m, während die Höhe des Stoppers 300b zwischen den Längsabschnittbereichen $C_1'$ bis $C_4'$ um ca. 30 $\mu$m reduziert wurde.

In den Figuren 10A und 11A wurde der Stopper-Längsabschnittbereich $C_1'$ länger dargestellt als die anderen Längsabschnittbereiche $C_2'$ bis $C_4'$. Die Längen der Längsabschnittbereiche $C_1'$ bis $C_4'$ sind jedoch von der Lage der Schraubenlöcher um die Medien-Durchgangsöffnung herum abhängig und können deshalb entsprechend unterschiedlich groß sein.

In allen Figuren 9A, 9B, 10A und 11A wurden die Höhenunterschiede in den Höhenprofilen der Stopper und der Bauteil-Abstützelemente stark vergrößert dargestellt, da sich diese Höhenunterschiede zeichnerisch nicht darstellen lassen, weil sie in der Größenordnung von einem 100-stel Millimeter oder einigen wenigen 100-stel Millimetern liegen.

Außerdem wird vor allem im Hinblick auf die Fig. 5A noch einmal darauf hingewiesen, dass sich infolge der kleinen Blechdicken von Dichtungslagen metallischer Flachdichtungen und der Flexibilität dieser Stahlblech-Dichtungslagen die mit einem Stopper und einem erfindungsgemäßen Bauteil-Abstützelement versehenen Bereiche einer erfindungsgemäßen Flachdichtung bei der Montage und im Betrieb der Dichtung infolge der dann auf die Dichtung einwirkenden Pressungskräfte ohne Weiteres in Richtung senkrecht zur Dichtungsebene so verlagern können, dass diese Bereiche in beim Einspannen der Flachdichtung entstehende Einwölbungen einer der Dichtung zugewandten Dichtfläche eines Bauteils eintauchen können, auch wenn wie bei der in Fig. 5A dargestellten Ausführungsform einer erfindungsgemäßen Flachdichtung der Stopper und das erfindungsgemäße Bauteil-Abstützelement im Inneren der Flachdichtung liegen. In diesem Zusammenhang sei noch darauf hingewiesen, dass beispielsweise Funktionslagen von Zylinderkopfdichtungen aus Stahlblechen mit einer Dicke von 0,20 oder 0,25 mm hergestellt werden.

**Patentansprüche**

1.  Zwischen Bauteilen (10, 14) einspannbare und zumindest im Wesentlichen metallische Flachdichtung (100) mit mindestens einer Medien-Durchgangsöffnung (102, 104, 106) sowie Schraubenlöchern (108) für den Durchtritt von dem Einspannen der Flachdichtung dienenden Montageschrauben, wobei die Flachdichtung zumindest um die Medien-Durchgangsöffnung herum mindestens eine Dichtungslage (130, 132) aufweist, mindestens eine Dichtungslage mit einer die Medien-Durchgangsöffnung umschließenden Abdichtsicke (120', 120") und mindestens eine Dichtungslage zur Begrenzung der Verformung der Abdichtsicke mit einem Stopper (136; 202b; 214a; 224; 234; 300b) versehen ist, welcher die Medien-Durchgangsöffnung zumindest im Wesentlichen umschließt, wobei die Flachdichtung Mittel zur Vergleichmäßigung der Pressung des Stoppers der eingebauten Flachdichtung längs des Stoppers aufweist, **dadurch gekennzeichnet, dass** die Mittel zur Pressungsvergleichmäßigung wenigstens ein Bauteil-Abstützelement (140; 140'; 140"; 200b; 200b'; 210a; 226; 236; 302b) aufweisen, das in einer Draufsicht auf die Flachdichtung nur über einem Längsabschnitt des Stoppers vorgesehen und so gestaltet ist, dass im Bereich dieses Stopper-Längsabschnitts die Flachdichtung lokal eine größere Dicke aufweist als in Bereichen von diesem Stopper-Längsabschnitt unmittelbar benachbarten Stopper-Längsabschnitten, und wobei das Bauteil-Abstützelement (140; 140'; 140"; 200b; 200b'; 210a; 226; 236; 302b) gegenüber auf die eingespannte Flachdichtung einwirkenden Pressungskräften verformungssteifer als die Abdichtsicke (120; 120'; 200a; 300a) ist sowie ein geprägtes solches Höhenprofil aufweist, dass die Höhe des Bauteil-Abstützelements längs des Stoppers (136; 202b; 214a; 224; 234; 300b) variiert.

2.  Flachdichtung nach Anspruch 1, welche zumindest um die Medien-Durchgangsöffnung (102, 104, 106) herum mindestens zwei Dichtungslagen (130, 132) aufweist.

3.  Flachdichtung nach Anspruch 1 oder 2, wobei das Bauteil-Abstützelement (140) an einer Dichtungslage (130) vorgesehen ist.

4.  Flachdichtung nach Anspruch 3, wobei der Stopper (136) an einer Dichtungslage (132) und das Bauteil-Abstützelement (140) an einer anderen Dichtungslage (130) vorgesehen ist.

5.  Flachdichtung nach Anspruch 3, wobei an einer Seite einer Dichtungslage (230) der Stopper (234) und an der anderen Seite dieser Dichtungslage das Bauteil-Abstützelement (236) vorgesehen ist.

6.  Flachdichtung nach einem der Ansprüche 3 bis 5, wobei eine mit mindestens einem Bauteil-Abstützelement (140) versehene Dichtungslage (130) auch mit mindestens einer Abdichtsicke (120') versehen ist.

7.  Flachdichtung nach einem der Ansprüche 3 bis 6, wobei das Bauteil-Abstützelement (140) von einer Prägung einer Dichtungslage (130) gebildet wird, welche mindestens einen die Dichtungslage überragenden Vorsprung bildet.

8.  Flachdichtung nach einem der Ansprüche 1 bis 7, wobei der Stopper (202b') mit einem Höhenprofil versehen ist, dessen Höhe, bezogen auf die von der mit dem Stopper versehenen Dichtungslage definierte Ebene, in Umfangsrichtung der Medien-Durchgangsöffnung variiert, und wobei ein für die Pressungsvergleichmäßigung erforderliches theoretisches Höhenprofil des Stoppers ersetzt ist durch eine mit dem theoretisch erforderlichen Höhenprofil gleichwirkende Kombination aus einem tatsächlichen Höhenprofil des Stoppers und dem mindestens einen Bauteil-Abstützelement (200b').

9.  Flachdichtung nach Anspruch 8, wobei die Höhe des Höhenprofils des Stoppers (202b') in mindestens einem Längsabschnitt des Stoppers zwischen einem maximalen Wert $H_{max}$ in mindestens einem ersten Längsabschnittbereich ($C_1$, $C_2$) einem minimalen Wert $H_{min}$ in mindestens einem zweiten Längsabschnittbereich ($C_3$, $C_4$) dieses Stopper-Längsabschnitts um eine Höhendifferenz $\Delta H = H_{max} - H_{min}$ variiert, wobei im ersten Längsabschnittbereich die tatsächliche Höhe des Stopper-Höhenprofils gegenüber einer für die Pressungsvergleichmäßigung erforderlichen theoretischen Höhe des Stopper-Höhenprofils um höchstens $\dfrac{\Delta H}{2}$ reduziert ist, und wobei im ersten Längsabschnittbereich des Stoppers die Reduktion der Höhe des Stoppers-Höhenprofils durch mindestens ein über dem ersten Längsabschnittbereich des Stoppers vorgesehenes Bauteil-Abstützelement (200b') kompensiert ist.

10. Flachdichtung nach Anspruch 8 oder 9, wobei das Höhenprofil des Stoppers (202b') durch hinsichtlich ihrer Höhe geprägte Längsabschnitte ($C_1$, $C_2$) des Stoppers gebildet wird.

11. Flachdichtung nach einem der Ansprüche 1 bis 10, wobei sich mindestens diejenigen Dichtungslagen (130 bzw. 132) über die ganze Flachdichtung erstrecken, welche mit der Abdichtsicke (120', 120") und/oder dem Stopper (136) und/oder dem Bauteil-Abstützelement (140) versehen sind.

12. Flachdichtung nach einem der Ansprüche 1 bis 11, welche als Zylinderkopfdichtung (100) gestaltet ist.

13. Flachdichtung nach Anspruch 12, wobei die Medien-Durchgangsöffnung eine Brennraumöffnung (102, 104, 106) ist.

14. Dichtverband mit einer zwischen Bauteilen (10; 14) eingespannten, im Wesentlichen metallischen Flachdichtung (100), wobei mindestens eines der Bauteile in Richtung senkrecht zu der von der Flachdichtung definierten Ebene eine örtlich unterschiedliche Bauteilsteifigkeit und die Flachdichtung mindestens eine Medien-Durchgangsöffnung (102; 104) 106), Schraubenlöcher (108) für den Durchtritt von dem Einspannen der Flachdichtung dienenden Montageschrauben und zumindest um die Medien-Durchgangsöffnung herum mindestens eine Dichtungslage (130, 132) aufweist, mindestens eine Dichtungslage mit einer die Medien-Durchgangsöffnung umschließenden Abdichtsicke (120', 120") und mindestens eine Dichtungslage zur Begrenzung der Verformung der Abdichtsicke mit einem Stopper (136; 202b; 214a; 224; 234; 300b) versehen ist, welcher die Medien-Durchgangsöffnung zumindest im Wesentlichen umschließt, wobei die Flachdichtung Mittel zur Vergleichmäßigung der Pressung des Stoppers der eingebauten Flachdichtung längs des Stoppers aufweist, **dadurch gekennzeichnet, dass** die Mittel zur Pressungsvergleichmäßigung mindestens ein Bauteil-Abstützelement (140; 140'; 140"; 200b; 200b'; 210a; 226; 236; 302b) aufweisen, das einem Bereich eines Bauteils gegenüberliegt, in dem dieses Bauteil im Vergleich zu diesem Bauteilbereich unmittelbar benachbarten Bauteilbereichen eine geringere Bauteilsteifigkeit aufweist, und welches in einer Draufsicht auf die Flachdichtung nur über einem Längsabschnitt des Stoppers vorgesehen und so gestaltet ist, dass im Bereich dieses Stopper-Längsabschnitts die Flachdichtung lokal eine größere Dicke aufweist als in Bereichen von diesem Stopper-Längsabschnitt unmittelbar benachbarten Stopper-Längsabschnitten, und wobei das Bauteil-Abstützelement (140; 140'; 140"; 200b; 200b'; 210a; 226; 236; 302b) gegenüber auf die eingespannte Flachdichtung einwirkenden Pressungskräften verformungssteifer als die Abdichtsicke (120; 120'; 200a; 300a) ist sowie ein geprägtes solches Höhenprofil aufweist, dass die Höhe des Bauteil-Abstützelements längs des Stoppers (136; 202b; 214a; 224; 234; 300b) variiert

15. Dichtverband nach Anspruch 14, dessen Flachdichtung gemäß mindestens einem der Ansprüche 2 bis 13 ausgebildet ist.

**Claims**

1. An at least substantially metallic flat gasket (100) which is clampable between components (10, 14) and which has at least one media passage opening (102, 104, 106) and screw holes (108) for the passage of mounting screws used to clamp the flat gasket, wherein the flat gasket comprises at least one gasket layer (130, 132) at least around the media passage opening, at least one gasket layer with a sealing bead (120', 120") surrounding the media passage opening, and, for limiting the deformation of the sealing bead, at least one gasket layer is provided with a stopper (136; 202b; 214a; 224; 234; 300b), which at least substantially surrounds the media passage opening, and wherein the flat gasket comprises means for evening out the compression of the stopper of the installed flat gasket along the length of the stopper, **characterised in that** the means for evening out the compression comprise at least one component support element (140; 140'; 140"; 200b; 200b'; 210a; 226; 236; 302b) which, in a plan view of the flat gasket, is provided only over a longitudinal portion of the stopper and is configured such that, in the region of this stopper longitudinal portion, the flat gasket is locally thicker than in regions of stopper longitudinal portions immediately adjacent to this stopper longitudinal portion, and wherein, against pressure forces acting upon the clamped flat gasket, the component support element is more resistant to deformations than the sealing bead (120; 120'; 300a) and is provided with such an embossed height profile, that the height of the component support element varies along the length of the stopper.

2. A flat gasket according to claim 1, which has at least two gasket layers (130, 132) at least around the media passage opening (102, 104, 106).

3. A flat gasket according to claim 1 or 2, wherein the component support element (140) is provided on a gasket layer (130).

4. The flat gasket according to claim 3, wherein the stopper (136) is provided on one gasket layer (132) and the component support element (140) is provided on another gasket layer (130).

5. A flat gasket according to claim 3, wherein the stopper (234) is provided on one side of a gasket layer (230) and the component support element (236) is provided on the other side of this gasket layer.

6. A flat gasket according to any one of claims 3 to 5, wherein a gasket layer (130) provided with at least one component support element (140) is also provided with at least one sealing bead (120').

7. A flat gasket according to any one of claims 3 to 6, wherein the component support element (140) is formed by a stamping of a gasket layer (130), which forms at least one protrusion protruding beyond the gasket layer.

8. A flat gasket according to any one of claims 1 to 7, wherein the stopper (202b') is provided with a height profile of which the height, based on the plane defined by the gasket layer provided with the stopper, varies in the peripheral direction of the media passage opening, and wherein a theoretical height profile of the stopper necessary for evening out the compression is replaced by a combination of an actual height profile of the stopper and the at least one component support element (200b'), this combination having the same effect as the theoretically necessary height profile.

9. A flat gasket according to claim 8, wherein the height of the height profile of the stopper (202b') in at least one longitudinal portion of the stopper varies between a maximum value $H_{max}$ in at least one first longitudinal portion region ($C_1$, $C_2$) and a minimum value $H_{min}$ in at least one second longitudinal portion region ($C_3$, $C_4$) of this stopper longitudinal portion by a height difference $\Delta H = H_{max} - H_{min}$, wherein the actual height of the stopper height profile in the first longitudinal portion region is reduced, compared to a theoretical height of the stopper height profile necessary for evening out the compression, by at most $\frac{\Delta H}{2}$, and wherein, in the first longitudinal portion region of the stopper, the reduction of the height of the stopper height profile is compensated by at least one component support element (200b') provided over the first longitudinal portion region of the stopper.

10. A flat gasket according to claim 8 or 9, wherein the height profile of the stopper is formed by longitudinal portions ($C_1$, $C_2$) of the stopper that are stamped in respect of their height.

11. A flat gasket according to any one of claims 1 to 10, wherein at least those gasket layers (130, 132, respectively) which are provided with the sealing bead (120', 120") and/or the stopper (136) and/or the component support element extend over the entire flat gasket.

12. A flat gasket according to any one of claims 1 to 11, which is formed as a cylinder head gasket (100).

13. A flat gasket according to claim 12, wherein the media passage opening is a combustion chamber opening (102, 104, 106).

14. A sealing assembly comprising a substantially metallic flat gasket (100) clamped between components (10; 14), wherein at least one of the components has a locally different component stiffness in the direction perpendicular to the plane defined by the flat gasket and the flat gasket has at least one media passage opening (102; 104; 106), screw holes (108) for the passage of mounting screws used to clamp the flat gasket, and at least one gasket layer (130, 132) at least around the media passage opening, at least one gasket layer is provided with a sealing bead (120', 120") surrounding the media passage opening, and, for limiting the deformation of the sealing bead, at least one gasket layer is provided with a stopper (136; 202b; 214a; 224; 234; 300b), which surrounds the media passage opening at least substantially, and wherein the flat gasket has means for evening out the compression of the stopper of the installed flat gasket along the length of the stopper, **characterised in that** the means for evening out the compression comprise at least one component support element (140; 140'; 140"; 200b; 200b'; 210a; 226; 236; 302b), which is arranged opposite a region of a component in which this component has a lower component stiffness compared to component regions immediately adjacent to this component region, and which, in a plan view of the flat gasket, is provided only over a longitudinal portion of the stopper and is configured such that, in the region of this stopper longitudinal portion, the flat gasket is locally thicker than in regions of stopper longitudinal portions immediately adjacent to this stopper longitudinal portion, and wherein, against pressure forces acting upon the clamped flat gasket, the component support element is more resistant to deformations than the sealing bead (120; 120'; 300a) and is provided with such an embossed height profile, that the height of the component support element varies along the length of the stopper.

15. A sealing assembly according to claim 14, the flat gasket of which is formed in accordance with at least one of claims 2 to 13.

## Revendications

1. Joint plat (100) pouvant être mis entre des pièces (10, 14) et au moins sensiblement métallique, avec au moins une ouverture de passage de milieux (102, 104, 106) ainsi que des trous de vis (108) pour le passage de vis de montage servant à la mise en place du joint plat, dans lequel le joint plat présente au moins une couche d'étanchéité (130, 132) au moins tout autour de l'ouverture de passage de milieux, au moins une couche d'étanchéité avec une nervure d'étanchéité (120', 120") entourant l'ouverture de passage de milieux et au moins une couche d'étanchéité, pour limiter la déformation de la nervure d'étanchéité, est pourvue d'une butée (136 ; 202b ; 214a ; 224 ; 234 ; 300b), laquelle entoure au moins sensiblement l'ouverture de passage de milieux, dans lequel le joint plat présente des moyens pour uniformiser la pression de la butée du joint plat mis en place le long de la butée,
**caractérisé en ce que** les moyens pour uniformiser la pression présentent au moins un élément d'appui de pièce (140 ; 140' ; 140" ; 200b ; 200b' ; 210a ; 226 ; 236 ; 302b), qui, dans une vue en élévation sur le joint plat, n'est prévu que sur une partie longitudinale de la butée et conçu de sorte que, dans la zone de cette partie longitudinale de butée, le joint plat présente localement une épaisseur plus importante que dans des zones de parties longitudinales de butée directement adjacentes à cette partie longitudinale de butée, et dans lequel l'élément d'appui de pièce (140 ; 140' ; 140" ; 200b ; 200b' ; 210a ; 226 ; 236 ; 302b) est plus résistant à la déformation vis-à-vis de forces de pression agissant sur le joint plat mis en place que la nervure d'étanchéité (120 ; 120' ; 200a ; 300a), et présente un profil de hauteur estampé tel que la hauteur de l'élément d'appui de pièce varie le long de la butée (136 ; 202b ; 214a ; 224 ; 234 ; 300b).

2. Joint plat selon la revendication 1, lequel présente au moins deux couches d'étanchéités (130, 132) au moins autour de l'ouverture de passage de milieux (102, 104, 106).

3. Joint plat selon la revendication 1 ou 2, dans lequel l'élément d'appui de pièce (140) est prévu sur une couche d'étanchéité (130).

4. Joint plat selon la revendication 3, dans lequel la butée (136) est prévue sur une couche d'étanchéité (132) et l'élément d'appui de pièce (140) sur une autre couche d'étanchéité (130).

5. Joint plat selon la revendication 3, dans lequel la butée (234) est prévue sur une face d'une couche d'étanchéité (230) et l'élément d'appui de pièce (236) sur l'autre face de cette couche d'étanchéité.

6. Joint plat selon l'une des revendications 3 à 5, dans lequel une couche d'étanchéité (130) pourvue d'au moins un élément d'appui de pièce (140) est également pourvue d'au moins une nervure d'étanchéité (120').

7. Joint plat selon l'une des revendications 3 à 6, dans lequel l'élément d'appui de pièce (140) est formé par un estampage d'une couche d'étanchéité (130), laquelle forme au moins une partie saillante faisant saillie de la couche d'étanchéité.

**8.** Joint plat selon l'une des revendications 1 à 7, dans lequel la butée (202b') est pourvue d'un profil de hauteur dont la hauteur, rapportée au plan défini par la couche d'étanchéité pourvue de la butée, varie dans la direction circonférentielle de l'ouverture de passage de milieux, et dans lequel un profil de hauteur théorique de la butée nécessaire à l'uniformisation de la pression est remplacé par une combinaison, ayant le même effet que le profil de hauteur théoriquement nécessaire, d'un profil de hauteur effectif de la butée et du au moins un élément d'appui de pièce (200b').

**9.** Joint plat selon la revendication 8, dans lequel la hauteur du profil de hauteur de la butée (202b') dans au moins une partie longitudinale de la butée varie entre une valeur maximale $H_{max}$ dans au moins une première zone de partie longitudinale ($C_1$, $C_2$) et une valeur minimale $H_{min}$ dans au moins une deuxième zone de partie longitudinale ($C_3$, $C_4$) de cette partie longitudinale de butée d'une différence de hauteur $\Delta H = H_{max} - H_{min}$, dans lequel, dans la première zone de partie longitudinale, la hauteur effective du profil de hauteur de butée est réduite par rapport à une hauteur théorique du profil de hauteur de butée, nécessaire pour l'uniformisation de la pression, d'au maximum $\frac{\Delta H}{2}$ et dans lequel, dans la première zone de partie longitudinale de la butée, la réduction de la hauteur du profil de hauteur de butée est compensée par au moins un élément d'appui de pièce (200b') prévu sur la première zone de partie longitudinale de la butée.

**10.** Joint plat selon la revendication 8 ou 9, dans lequel le profil de hauteur de la butée (202b') est formé par des parties longitudinales ($C_1$, $C_2$) de la butée, estampées en ce qui concerne leur hauteur.

**11.** Joint plat selon l'une des revendications 1 à 10, dans lequel au moins les couches d'étanchéité (130 ou 132), lesquelles sont pourvues de la nervure d'étanchéité (120', 120") et/ou de la butée (136) et/ou de l'élément d'appui de pièce (140), s'étendent sur tout le joint plat.

**12.** Joint plat selon l'une des revendications 1 à 11, lequel est conçu en tant que joint de culasse (100).

**13.** Joint plat selon la revendication 12, dans lequel l'ouverture de passage de milieux est une ouverture de chambre de combustion (102, 104, 106).

**14.** Ensemble d'étanchéité avec un joint plat (100) sensiblement métallique pouvant être mis entre des pièces (10 ; 14), dans lequel au moins une des pièces dans une direction perpendiculaire au plan défini par le joint plat présente une rigidité de pièce différente localement et le joint plat présente au moins une ouverture de passage de milieux (102 ; 104 ; 106), des trous de vis (108) pour le passage de vis de montage servant à la mise en place du joint plat et au moins une couche d'étanchéité (130, 132) au moins autour de l'ouverture de passage de milieux, au moins une couche d'étanchéité avec une nervure d'étanchéité (120', 120") entourant l'ouverture de passage de milieux et au moins une couche d'étanchéité, pour limiter la déformation du collet d'étanchéité, est pourvue d'une butée (136 ; 202b ; 214a ; 224 ; 234 ; 300b), laquelle entoure au moins sensiblement l'ouverture de passage de milieux, dans lequel le joint plat présente des moyens pour uniformiser la pression de la butée du joint plat mis en place le long de la butée, **caractérisé en ce que** les moyens pour uniformiser la pression présentent au moins un élément d'appui de pièce (140 ; 140' ; 140" ; 200b ; 200b' ; 210a ; 226 ; 236 ; 302b), qui est opposé à une zone d'une pièce dans laquelle cette pièce, en comparaison des zones de pièce directement adjacentes à cette zone de pièce, présente une rigidité de pièce moindre, et lequel, dans une vue en élévation sur le joint plat, n'est prévu que sur une partie longitudinale de la butée et conçu de sorte que, dans la zone de cette partie longitudinale de butée, le joint plat présente localement une épaisseur plus importante que dans des zones de parties longitudinales de butée directement adjacentes à cette partie longitudinale de butée, et dans lequel l'élément d'appui de pièce (140 ; 140' ; 140" ; 200b ; 200b' ; 210a ; 226 ; 236 ; 302b) est plus résistant à la déformation vis-à-vis de forces de pression agissant sur le joint plat mis en place que la nervure d'étanchéité (120 ; 120' ; 200a ; 300a), et présente un profil de hauteur estampé tel que la hauteur de l'élément d'appui de pièce varie le long de la butée (136 ; 202b ; 214a ; 224 ; 234 ; 300b).

**15.** Ensemble d'étanchéité selon la revendication 14, dont le joint plat est réalisé selon au moins une des revendications 2 à 13.

FIG.1

FIG.2

EP 3 380 760 B1

124'  122'  130  120'  136

102

124"  122"  134  132  120"

FIG.3

136  130  120'  120'  136

104

106

120"  120"  132  134

FIG.4

130  120'  140a  140

102

134  132  120"  136

FIG.5A

**FIG.5B**

**FIG.5C**

**FIG.5D**

130    120'

140'

140a'

102

# FIG.6

FIG.7A

FIG.7B

FIG.8A

FIG.8B

FIG.8C

FIG.8D

FIG.9A

FIG.9B

FIG.10A

FIG.10B

EP 3 380 760 B1

FIG.11A

FIG.11B

EP 3 380 760 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070090607 A1